(19) Europäisches Patentamt
European Patent Office
Office européen des brevets

(11) **EP 3 581 828 A1**

(12) **EUROPEAN PATENT APPLICATION**
published in accordance with Art. 153(4) EPC

(43) Date of publication:
**18.12.2019 Bulletin 2019/51**

(51) Int Cl.:
***F16H 9/18*** *(2006.01)*

(21) Application number: **18814096.6**

(22) Date of filing: **18.04.2018**

(86) International application number:
**PCT/JP2018/016046**

(87) International publication number:
**WO 2018/225390 (13.12.2018 Gazette 2018/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.06.2017 JP 2017114150**
**18.12.2017 JP 2017241461**

(71) Applicant: **Bando Chemical Industries, Ltd.**
**Kobe-shi, Hyogo 650-0047 (JP)**

(72) Inventors:
• **MIYATA, Hirofumi**
**Kobe-shi**
**Hyogo 650-0047 (JP)**
• **NAGAYA, Shuichi**
**Kobe-shi**
**Hyogo 650-0047 (JP)**

(74) Representative: **Delorme, Nicolas et al**
**Cabinet Germain & Maureau**
**BP 6153**
**69466 Lyon Cedex 06 (FR)**

(54) **WEIGHT DEVICE**

(57)     A weight device (10) includes a plurality of shafts (12), rolling bodies (13) provided to the respective shafts (12), and a shaft fixer (11) configured to fix the shafts (12) in a parallel manner. The shaft fixer may be two side plates provided at both ends of each shaft (12), respectively.

## FIG.1

EP 3 581 828 A1

**Description**

TECHNICAL FIELD

The present disclosure relates to a weight device.

BACKGROUND ART

In a motorcycle or the like, an automatic transmission, in which a speed change is automatically performed according to the number of revolutions of an engine, is used. The automatic transmission includes a pulley having a fixed sheave and a movable sheave, a V-belt wound around the pulley, a ramp plate attached to a rear side of the movable sheave in the state of being fixed to a rotating shaft, and a weight device disposed in a gap between the ramp plate and the movable sheave so as to be movable in a radial direction of the pulley.

As an exemplary configuration of the weight device, there is a weight device having a cylindrical weight adjustment member and a covering member that covers the outer peripheral surface or the like of the weight adjustment member (for example, Patent Document 1).

CITATION LIST

PATENT DOCUMENTS

Patent Document 1: Japanese Unexamined Patent Publication No. H03-24349

SUMMARY OF THE INVENTION

TECHNICAL PROBLEM

Examples of characteristics relating to weight devices include rapidity of response, a change range of a speed ratio, acceleration performance, and fuel-saving performance. A conventional weight device having a simple cylindrical shape has conflicting characteristics, such as acceleration performance and fuel-saving performance, which are difficult to achieve.

In view of the forgoing problem, a weight device of the present disclosure achieves a plurality of characteristics which conflict with each other in the conventional art.

SOLUTION TO THE PROBLEM

The weight device includes a plurality of shafts, rolling bodies provided to the respective shafts, and a shaft fixer configured to fix the shafts in a parallel manner.

The shaft fixer may be two side plates provided at both ends of each shaft, respectively.

Furthermore, the shafts may include a first shaft, a second shaft, and a third shaft. When viewed in parallel to the shafts, a distance X between the center of the first shaft and the center of the second shaft is 0.52 times or more of a distance Y between the center of the second shaft and the center of the third shaft. The distance Y is longer than a distance Z between the center of the third shaft and the center of the first shaft, and than the distance X.

ADVANTAGES OF THE INVENTION

The weight device of the present disclosure is superior in terms of, e.g., acceleration performance, and fuel-saving performance when it is used for a belt-type automatic transmission.

BRIEF DESCRIPTION OF THE DRAWINGS

[FIG. 1] FIG. 1 is a view schematically illustrating an exemplary weight device according to a first embodiment of the present disclosure.
[FIG. 2] FIG. 2 is a cross-sectional view taken along line II-II of FIG. 1.
[FIG. 3] FIG. 3 is a view schematically illustrating main elements of a belt-type automatic transmission.
[FIG. 4] FIG. 4 is a view illustrating a state in which the number of revolutions is small when the weight device of FIG. 1 is used for a belt-type automatic transmission.

[FIG. 5] FIG. 5 is a view illustrating a state in which the number of revolutions is large when the weight device of FIG. 1 is used for a belt-type automatic transmission.

[FIG. 6] FIG. 6 is a view illustrating a state in which the number of revolutions is small when a weight device of a comparative example is used for a belt-type automatic transmission.

[FIG. 7] FIG. 7 is a view illustrating a state in which the number of revolutions is large when the weight device of the comparative example is used for a belt-type automatic transmission.

[FIG. 8] FIG. 8 is a diagram illustrating the responsiveness of a movable sheave and the acceleration characteristics of a vehicle when the weight device of FIG. 1 is mounted on a two-wheel transmission unit.

[FIG. 9] FIG. 9 is a diagram illustrating the responsiveness of a movable sheave and the acceleration characteristics of a vehicle when the weight device of the comparative example is mounted on a two-wheel transmission unit.

[FIG. 10] FIG. 10 is a diagram illustrating a relation between the number of revolutions of an engine and a speed ratio for the weight devices of FIG. 1 and the comparative example.

[FIG. 11] FIG. 11 is a diagram illustrating a relation between a vehicle speed and a speed ratio for the weight devices of FIG. 1 and the comparative example.

[FIG. 12] FIG. 12 is a view schematically illustrating an exemplary weight device of a second embodiment.

[FIG. 13] FIG. 13 is a cross-sectional view taken along line XIII-XIII of FIG. 12.

[FIG. 14] FIG. 14 is a view illustrating a state in which the number of revolutions is small when the weight device of FIG. 12 is used for a belt-type automatic transmission.

[FIG. 15] FIG. 15 is a view illustrating a state in which the number of revolutions is small when the weight device of FIG. 12 is used for a belt-type automatic transmission.

[FIG. 16] FIG. 16 is a view schematically illustrating a weight device in a third embodiment of the present disclosure.

[FIG. 17] FIG. 17 is a cross-sectional view taken along line XVII-XVII in FIG. 16.

[FIG. 18] FIG. 18 is a view for explaining a belt-type automatic transmission.

[FIG. 19] FIG. 19 is a view illustrating a state of a low ratio when a weight device of an example is disposed in a belt-type automatic transmission.

[FIG. 20] FIG. 20 is a view illustrating a state of a high ratio when the weight device of the example is disposed in a belt-type automatic transmission.

[FIG. 21] FIG. 21 is a view illustrating a state of a low ratio when a weight device of a comparative example is disposed in a belt-type automatic transmission.

[FIG. 22] FIG. 22 is a view illustrating a state of a high ratio when the weight device of the comparative example is disposed in a belt-type automatic transmission.

[FIG. 23] FIG. 23 is a view illustrating an example in which a rolling body is less likely to be turned when the weight device of the example is disposed in a belt-type automatic transmission.

[FIG. 24] FIG. 24 is a view illustrating an example in which the rolling body is highly likely to be turned when the weight device of the example is disposed in a belt-type automatic transmission.

[FIG. 25] FIG. 25 is a view for explaining, when the weight device of the example is disposed in a belt-type automatic transmission, the position of the center of gravity of the weight device and easiness of turning.

[FIG. 26] FIG. 26 is a view for explaining, when the weight device of the third embodiment is mounted on a belt-type automatic transmission, the arrangement of shafts and the arrangement of the center of gravity where turning is less likely to occur.

[FIG. 27] FIG. 27 is a view for explaining the shape of a shaft fixing member, particularly, a raised part and a recessed part.

[FIG. 28] FIG. 28 is a view illustrating a raised part provided in the weight device of the example and having a function of controlling and returning an orientation.

[FIG. 29] FIG. 29 is a view illustrating a raised part provided in the weight device of the example and having a function of controlling and returning an orientation.

[FIG. 30] FIG. 30 is a view illustrating a raised part provided in the weight device of the example and having a function of controlling and returning an orientation.

[FIG. 31] FIG. 31 is a view illustrating another configuration example for the weight device of the example.

[FIG. 32] FIG. 32 is a view illustrating another configuration example for the weight device of the example.

[FIG. 33] FIG. 33 is a view illustrating another configuration example for the weight device of the example.

[FIG. 34] FIG. 34 are graphs arranged side by side in order to compare the performance of the weight device of the example with the performance of the weight device of the comparative example.

[FIG. 35] FIG. 35 are graphs arranged side by side in order to compare the performance of the weight device of the example with the performance of the weight device of the comparative example.

[FIG. 36] FIG. 36 are graphs arranged side by side in order to compare the performance of the weight device of the example with the performance of the weight device of the comparative example.

[FIG. 37] FIG. 37 are graphs arranged side by side in order to compare the performance of the weight device of the example with the performance of the weight device of the comparative example.

DESCRIPTION OF EMBODIMENTS

(First Embodiment)

Hereinafter, a first embodiment of the present disclosure will be described with reference to the drawings.

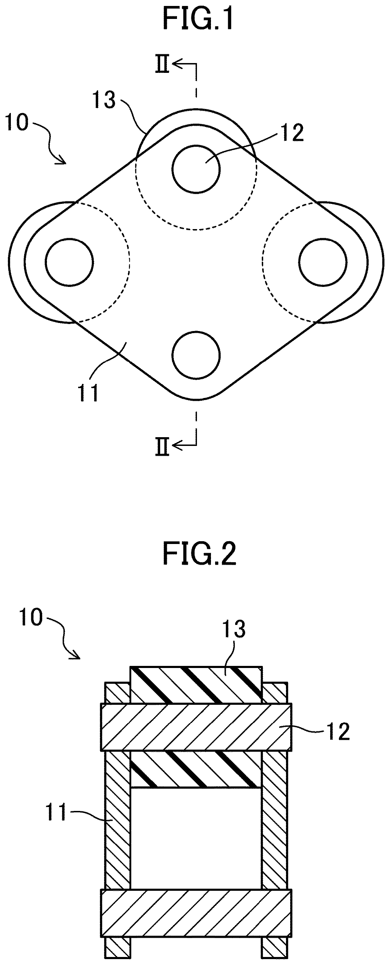

FIG. 1 is a view schematically illustrating an exemplary weight device 10 of the present embodiment. Furthermore, FIG. 2 is a cross-sectional view taken along line II-II in FIG. 1.

As illustrated in FIGS. 1 and 2, the weight device 10 includes two side plates 11 provided in parallel to each other, a plurality of shafts 12 provided to connect the side plates 11 to each other, and rolling bodies 13 provided to the shafts 12. Four shafts 12 are disposed in a rhombic shape and the side plate 11 has a rhombic shape with rounded corners corresponding to the arrangement of the shafts 12. Among the rolling bodies 13, two rolling bodies 13 are provided to the two shafts (the right and left shafts in FIG. 1) on a long diagonal line of the rhombic shape, respectively, and one rolling body 13 is provided to only one of the two shafts (the upper shaft in FIG. 1) on a short diagonal line of the rhombic shape. The rolling body 13 is rotatable by a rolling bearing or a sliding bearing with respect to the shaft 12.

In the above, the case where the four shafts 12 are provided has been described; however, the shaft 12 with no rolling body 13 may be omitted and three shafts 12 may be provided. Furthermore, the four shafts 12 are disposed in the rhombic shape, but it need not to be strictly rhombic. Moreover, the shape of the side plate 11 is not particularly limited as long as it does not interfere with a movable sheave, a ramp plate or the like.

Furthermore, the diameter of the rolling body 13, for example, is 8 mm, a distance between the centers of the two shafts on the long diagonal line of the rhombic shape, for example, is 17 mm, and a distance between the centers of the two shafts on the short diagonal line of the rhombic shape, for example, is 14 mm. Moreover, the thickness (the length of the shaft 12) of the weight device 10, for example, is 12 mm. These dimensions are an example and may be set according to a transmission or the like to be used.

Furthermore, there are various types of materials for the constituent members of the weight device 10, and for example, the side plate 11 may be made of a pressed steel plate or a stainless steel, the shaft 12 may be made of a carbon steel, and the rolling body 13 may be made of polyamide resin.

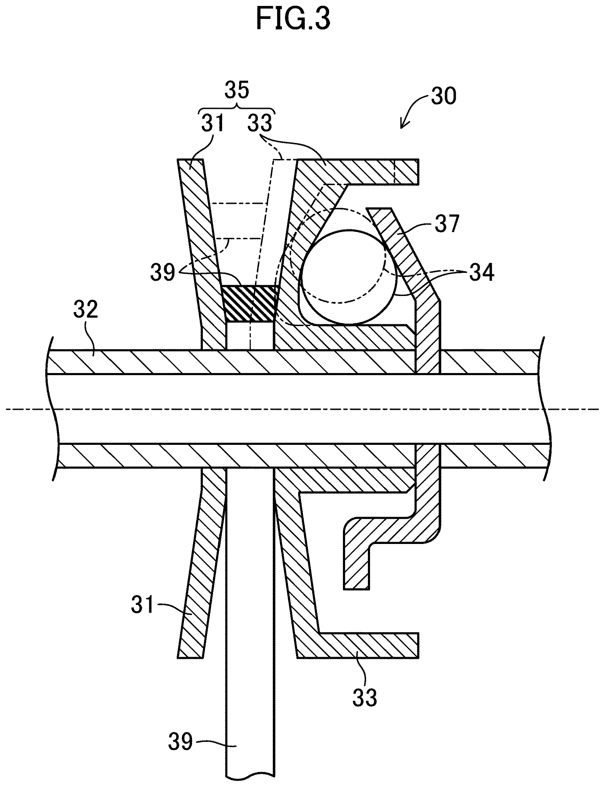

Next, a belt-type automatic transmission using a weight device will be described. FIG. 3 is a cross-sectional view schematically illustrating a part of a belt-type automatic transmission 30.

The belt-type automatic transmission 30 includes a pulley 35 that rotates about a rotating shaft 32, a V-belt 39 wound around a V-shaped groove of the pulley 35, a weight device 34, and a ramp plate 37. The pulley 35 includes a fixed sheave 31 fixed to the rotating shaft 32, and a movable sheave 33 movable in an axial direction of the rotating shaft 32. Here, the weight device 34 is represented by a simple circle, but this temporarily indicates the weight device by a circle in order to explain the belt-type automatic transmission 30 without limiting the shape of the weight device.

The ramp plate 37 having an approximately disc shape is fixed to the rotating shaft 32 with a gap capable of holding the weight device 34 on the rear side of the movable sheave 33. The gap between the movable sheave 33 and the ramp plate 37 is narrowed outward in the radial direction of the pulley 35.

In such a belt-type automatic transmission 30, when the number of revolutions of an engine connected to the rotating shaft 32 increases, the weight device 34 moves outward in the radial direction of the pulley 35 by the centrifugal force. In this way, the movable sheave 33 pressed to the weight device 34 moves in a direction in which the width of the V-shaped groove is narrowed in the pulley 35. As a consequence, the winding radius of the V-belt 39 increases, so that stepless speed change is automatically performed. FIG. 3 illustrates, with broken lines, the states of the movable sheave 33, the weight device 34, and the V-belt 39 when the number of revolutions of the engine is large.

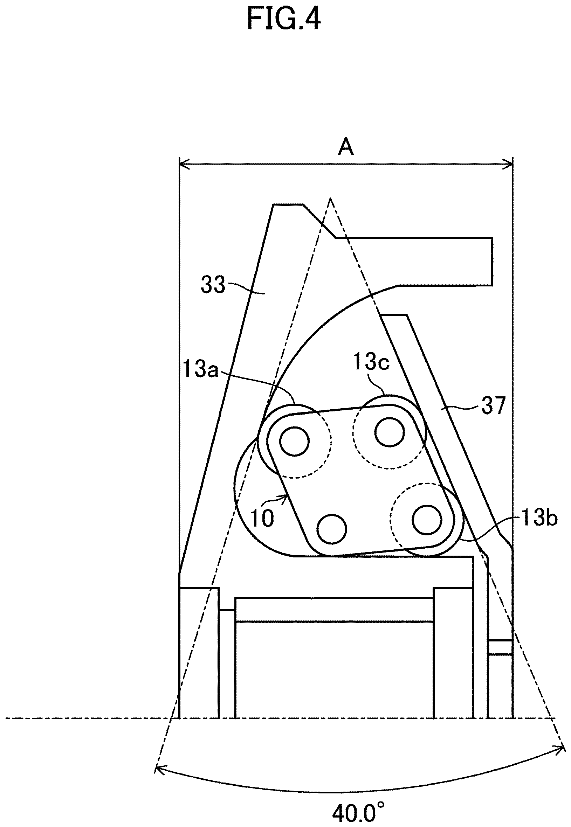

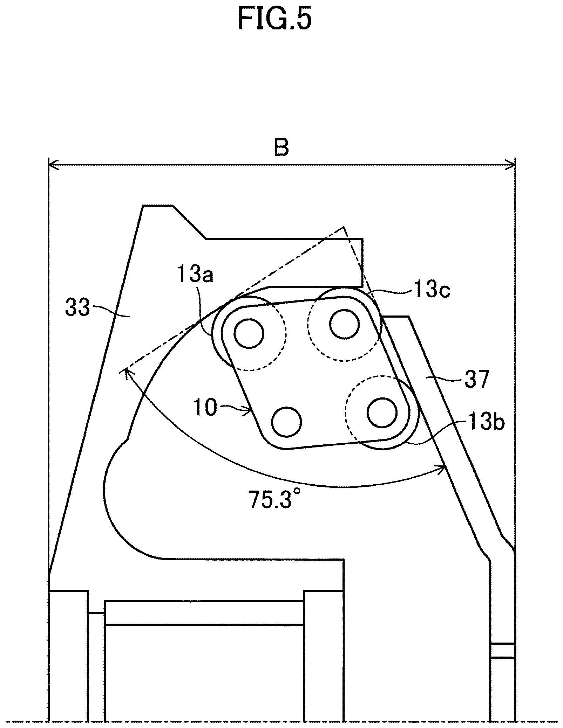

Next, FIGS. 4 and 5 illustrate states in which the weight device 10 of the present embodiment (example) is used for the belt-type automatic transmission. FIGS. 4 and 5 illustrate an enlargement of the movable sheave 33, the ramp plate 37, and the weight device 10 disposed in the gap therebetween. Furthermore, FIG. 4 illustrates a state in which the number of revolutions of the engine is small, and the weight device 10 is located on a side (downward in the drawing) near the shaft. On the other hand, FIG. 5 illustrates a state in which the number of revolutions of the engine is large, and the weight device 10 moves outward in the radial direction of the pulley (upward in the drawing) and the movable sheave 33 moves in a direction away from the ramp plate 37.

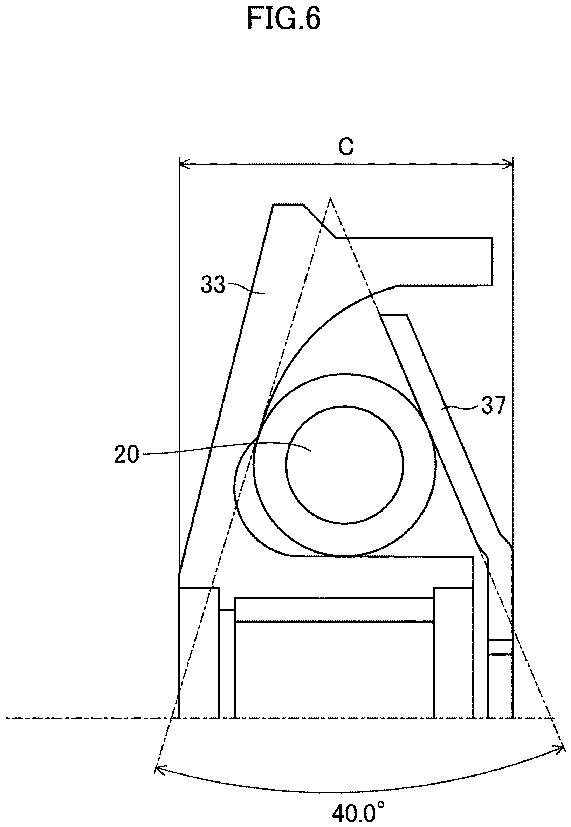

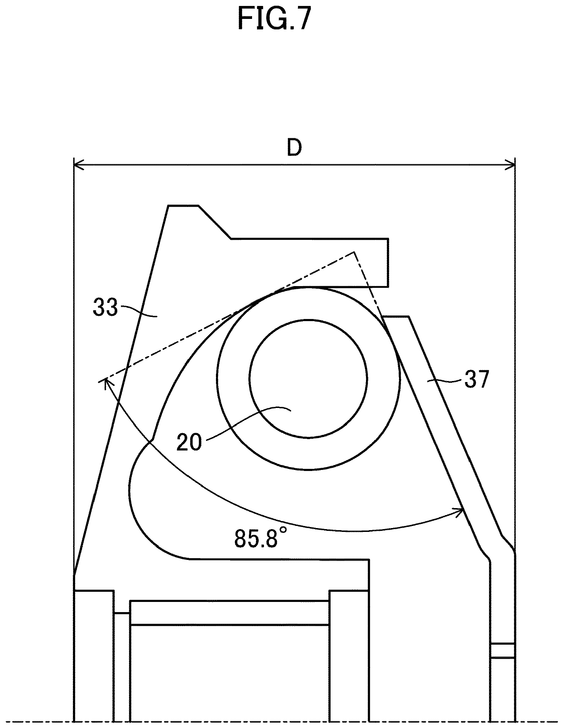

Furthermore, FIGS. 6 and 7 illustrate, as comparative examples, states in which a cylindrical weight device 20 is similarly used for the belt-type automatic transmission. FIG. 6 illustrates a state in which the number of revolutions of an engine is small, and FIG. 7 illustrates a state in which the number of revolutions is large.

As illustrated in FIG. 4, in the case of the weight device 10 of the example, the different rolling bodies 13 come in contact with the movable sheave 33 and the ramp plate 37. Specifically, a rolling body 13a comes in contact with the movable sheave 33 and rolling bodies 13b and 13c come in contact with the ramp plate 37. Accordingly, when the weight device 10 moves outward in the radial direction due to an increase in the number of revolutions of the engine, the rolling body 13a can roll on the movable sheave 33 and the rolling bodies 13b and 13c can roll on the ramp plate 37. As a consequence, the weight device 10 can move with a small rolling resistance.

On the other hand, in the case of the comparative example of FIG. 6, the weight device 20 has a simple cylindrical shape and comes in contact with both the movable sheave 33 and the ramp plate 37. As a consequence, even though the weight device 20 of the comparative example can roll with respect to one of the movable sheave 33 and the ramp plate 37, the weight device 20 slides while rotating in an opposite direction with respect to the other one at that time, resulting in an increase in resistance to movement.

As described above, the weight device 10 of the example can move with a smaller resistance and the response of the movable sheave 33 is quick, so that the response of acceleration and deceleration is improved.

Furthermore, when the weight device 10 of the example is used, the movement range of the movable sheave 33 becomes large. This will be described with reference to FIGS. 4 to 7.

As illustrated in FIG. 4, in a state in which the weight device 10 of the example is used and the number of revolutions of the engine is small, a distance A between predetermined positions of the movable sheave 33 and the ramp plate 37 is 37 mm. On the other hand, in the case of FIG. 5 in which the number of revolutions is large, a distance B between the same positions becomes large and is 51 mm. That is, a movement distance of the movable sheave 33 in an axial length direction is 14 mm. When the same or similar measurement is performed for the comparative example, a distance C is 37 mm in the case of FIG. 6 and a distance D is 49 mm in the case of FIG. 7. That is, the movement distance of the movable sheave 33 in the axial length direction is 12 mm.

Accordingly, in the example, the movement distance of the movable sheave 33 is larger than the comparative example by 2 mm, which means that a change in the diameter of the pulley becomes large and a speed ratio also becomes large. When the speed ratio can be made large, it is possible to reduce the number of revolutions of the engine during high-speed running and to improve fuel efficiency.

The above numerical values are merely examples. Since the weight device 20 of the related art has a cylindrical shape, when the shape is considered in FIGS. 6 and 7, only the diameter can be changed. Accordingly, the movement distance of the movable sheave is determined only by the diameter of the weight device 20. Moreover, the diameter of the weight device 20 that can be used is limited by, e.g., the shape or dimension of the automatic transmission. On the other hand, in the case of the weight device 10 of the present embodiment, it is possible to set the arrangement and diameters of a plurality of rolling bodies 13 in FIGS. 4 and 5. Accordingly, even when the weight device 10 is used for the same automatic transmission, the degree of freedom of design is higher than that of the weight device 20 of the related art and it is possible to further increase the movement distance of the movable sheave.

Moreover, since the weight device 20 of the related art has a cylindrical shape, the center of gravity is inevitably central. On the other hand, it is also possible to design the position of the center of gravity of the weight device 10 by a combination of the shape of the side plate 11, the arrangement of the shafts 12, and the diameters of the rolling bodies 13.

Furthermore, the weight device 10 of the present embodiment can be used in place of a weight device used in an existing belt-type automatic transmission such as the conventional weight device having a cylindrical shape in the comparative example. That is to say, the movable sheave 33 and the ramp plate 37 do not require a special structure for using the weight device 10 (for example, a special structure such as providing a groove in the ramp plate 37 and/or the movable sheave 33 in order to distinguish a contact point with the weight device 10). The weight device 10 of the present embodiment is simply used in place of the conventional weight device, so that it is possible to improve responsiveness and performance of fuel efficiency or the like.

Furthermore, in order to improve responsiveness or the like of the belt-type automatic transmission, it is desired to increase thrust by which the weight device 10 moves the movable sheave 33.

In this regard, an angle (referred to as a wedge angle) formed by tangents between the rolling bodies 13 of the weight device 10 of the present embodiment and the movable sheave 33/the ramp plate 37 is considered. The angle varies depending on the position of the weight device 10, but for example, is 40° in FIG. 4 in which the number of revolutions of the engine is small and is 75.3° in FIG. 5 in which the number of revolutions is large. Similarly, it is assumed that an angle formed by the tangent of the conventional weight device 20 and the movable sheave 33 and the tangent of the conventional weight device 20 and the ramp plate 37 is a wedge angle. The angle is 40° in FIG. 6 in which the number of revolutions of the engine is small and is 85.8° in FIG. 7 in which the number of revolutions is large.

During the operation of a belt-type automatic transmission, if the centrifugal force of a weight device is the same (that is, the weight and the radial position of the weight device are the same), when a wedge angle is small, thrust for moving a movable sheave increases. For example, in FIG. 4, when the weight device 10 is moved upward (vertical direction), the smaller the wedge angle, the greater the force applied to the movable sheave 33 in a horizontal direction. Accordingly, the wedge angle is desired to be small.

In the case of FIGS. 4 and 6 in which the number of revolutions of the engine is small, the wedge angle is 40° for both the weight device 10 of the present embodiment and the conventional weight device 20. On the other hand, in the case of FIGS. 5 and 7 in which the number of revolutions of the engine is large, the wedge angle of the weight device 10 of the present embodiment is 75.3° and is smaller than the wedge angle 85.8° of the conventional weight device 20. In this way, particularly, when the number of revolutions is large, the wedge angle can be made small to increase thrust that is applied to the movable sheave.

For the conventional weight device 20 having a cylindrical shape, the diameter of the weight device 20 is made small, so that thrust generated by decreasing the wedge angle can be made equal to that of the weight device 10 of the present embodiment. However, in such a case, since the movement amount of the movable sheave 33 is decreased, a speed ratio is decreased.

As described above, in the weight device 20 having a cylindrical shape, the wedge angle and the speed ratio are determined by the value of the diameter thereof. On the other hand, in the weight device 10 of the present embodiment having the rolling bodies 13, the degree of freedom of design is high, so that a plurality of factors such as the wedge angle and the speed ratio can be set as desired.

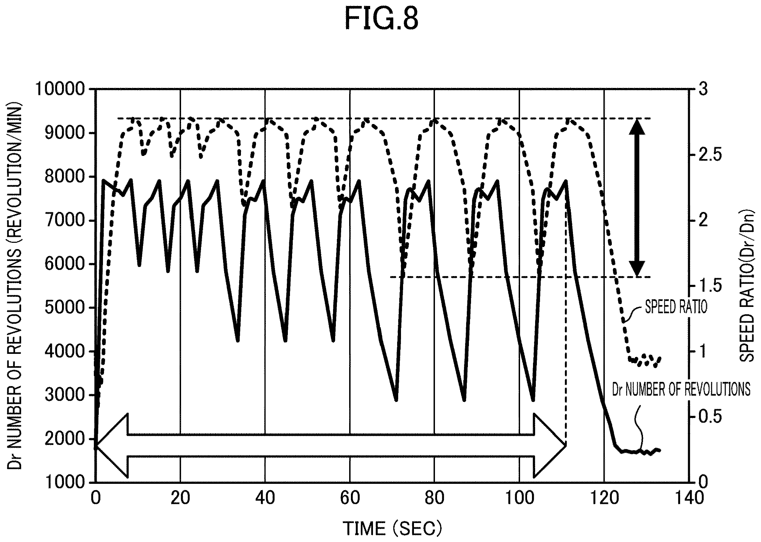

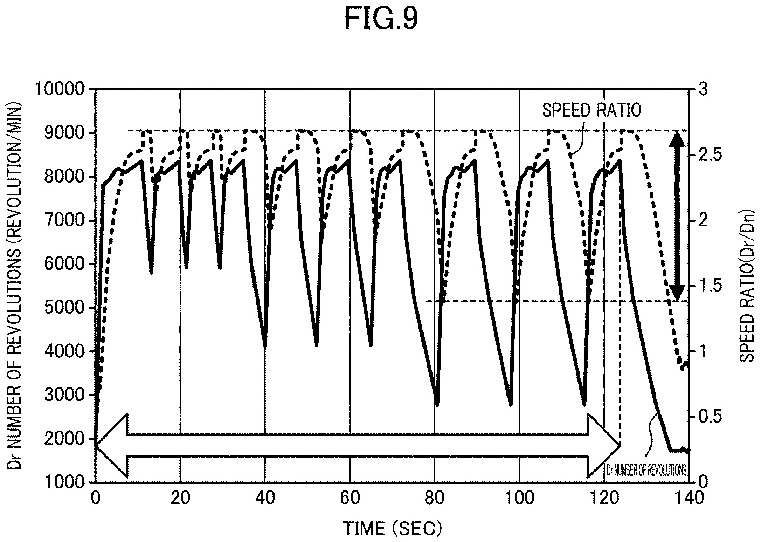

Next, FIG. 8 illustrates responsiveness of the movable sheave and acceleration characteristics of a vehicle when the weight device 10 of the present embodiment (example) is mounted on a two-wheel speed change unit and is subjected to kick-down running in which sudden acceleration and sudden deceleration are repeated. Furthermore, FIG. 9 illustrates a result of the same test for the weight device 20 of the comparative example. In FIGS. 8 and 9, a solid line indicates the number of revolutions (revolution/minute) of a driving side and a broken line indicates a speed ratio (Dr/Dn) between the driving side (Dr) and a driven side (Dn).

In FIGS. 8 and 9, a two-way arrow in the horizontal direction indicates a time until the movable sheave 33 during 10th sudden acceleration responds. The time is about 125 seconds in the case of FIG. 9 (the comparative example, the weight device 20) and is about 110 seconds in the case of FIG. 8 (the example, the weight device 10), and is obviously short in the present embodiment. That is to say, in the weight device 10 of the present embodiment, the movable sheave 33 quickly responds to a change in the number of revolutions of the driving side, so that it is possible to achieve a sudden acceleration and deceleration cycle in a short time. This is considered to be due to the fact that resistance when the weight device 10 moves is small as described above.

Furthermore, when comparing peaks of the number of revolutions of the driving side during acceleration, the peak is about 8,000 revolutions/minute in the example of FIG. 8 and is smaller than about 8,200 to about 8,300 revolutions/minute in the comparative example of FIG. 9. Moreover, a maximum value of the speed ratio in the example is larger than that in the comparative example. Accordingly, the weight device 10 of the example responds quickly to a high speed ratio at a small number of revolutions compared with the weight device 20 of the comparative example.

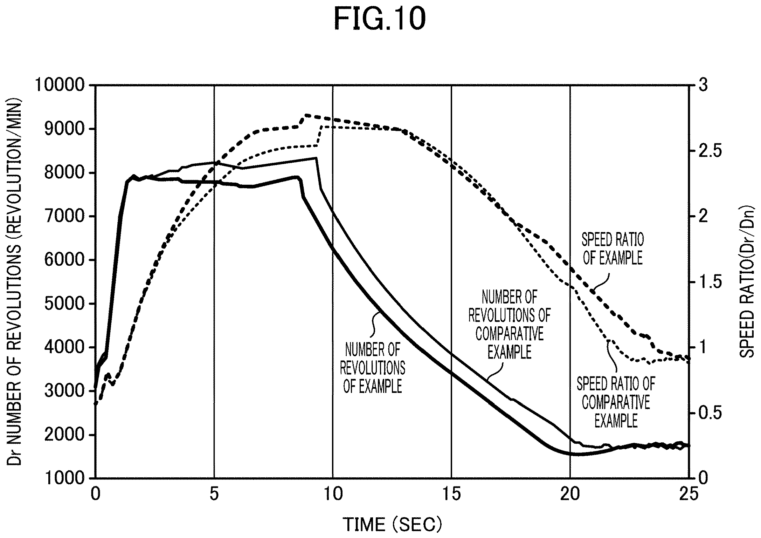

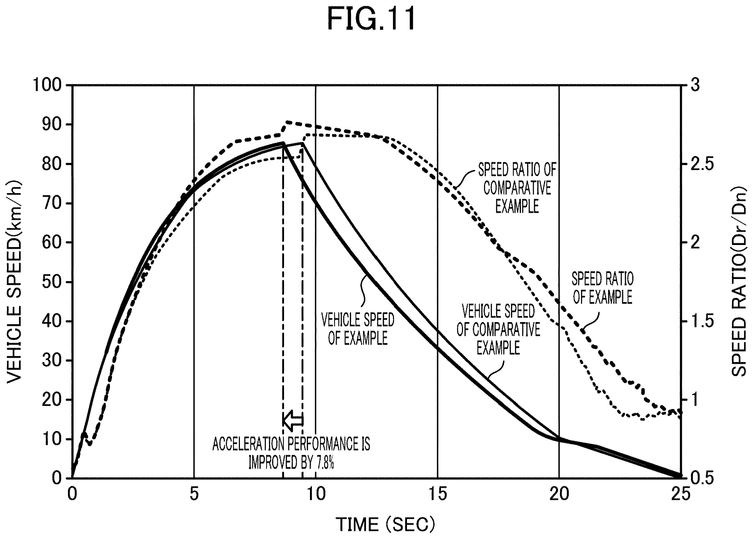

Next, FIG. 10 illustrates a relation between the number of revolutions of the engine and the speed ratio for the example and the comparative example. A solid line indicates the number of revolutions, a broken line indicates the speed ratio, a thick line indicates the example, and a thin line indicates the comparative example. FIG. 11 illustrates a relation between a vehicle speed and the speed ratio for the example and the comparative example. A solid line indicates the vehicle speed, a broken line indicates the number of revolutions, a thick line indicates the example, and a thin line indicates the comparative example. The vehicle speed means the running speed of a bicycle.

From FIG. 10, it can be seen that the example achieves a large speed ratio at a smaller number of revolutions than the comparative example and responds in a shorter time than the comparative example. From FIG. 11, it can be seen that the example achieves acceleration in a shorter time than the comparative example. Here, acceleration performance of 7.8% is improved.

Moreover, since the movable sheave can be moved to a high speed ratio, it is possible to reduce an average number of revolutions of the engine, so that it is possible to improve running fuel efficiency. The specific example thereof is illustrated in Table 1 below. As illustrated in Table 1 below, a fuel-saving effect estimated from a fuel injection time is 3.70% in class 1 of the world-wide motorcycle test cycle (WMTC) mode value and is 5.89% in class 2-1 thereof.

[Table 1]

| Weight Device | WMTC Mode | Fuel Injection Cumulative Time (sec) at Each Section Running Time | | | | Fuel Injection Cumulative Time (sec) | Fuel-saving Effect (%) |
|---|---|---|---|---|---|---|---|
| | | 0-300 (sec) | 301-600 (sec) | 601-900 (sec) | 901-1200 (sec) | | |
| Example | Class 1 | 32.28 | 30.99 | 30.94 | 30.89 | 125.10 | 3.70 |
| | Class 2-1 | 32.16 | 31.09 | 65.11 | 54.23 | 182.60 | 5.89 |
| Comparative Example | Class 1 | 34.00 | 31.99 | 32.35 | 31.56 | 129.90 | - |
| | Class 2-1 | 33.54 | 32.22 | 69.71 | 58.57 | 194.03 | - |

Furthermore, when the weight device 10 is incorporated into the belt-type automatic transmission and operates by the centrifugal force, it is desired that the state in which the three rolling bodies 13 come in contact with the movable sheave 33 and the ramp plate 37 is stably maintained. To this end, the position of the center of gravity of the weight device 10 is important. In this regard, in the weight device 10, the shape of the side plate 11, the arrangement of the shafts 12, or the like are designed, so that the position of the center of gravity of the weight device 10 can be set to a desired position.

(Second Embodiment)

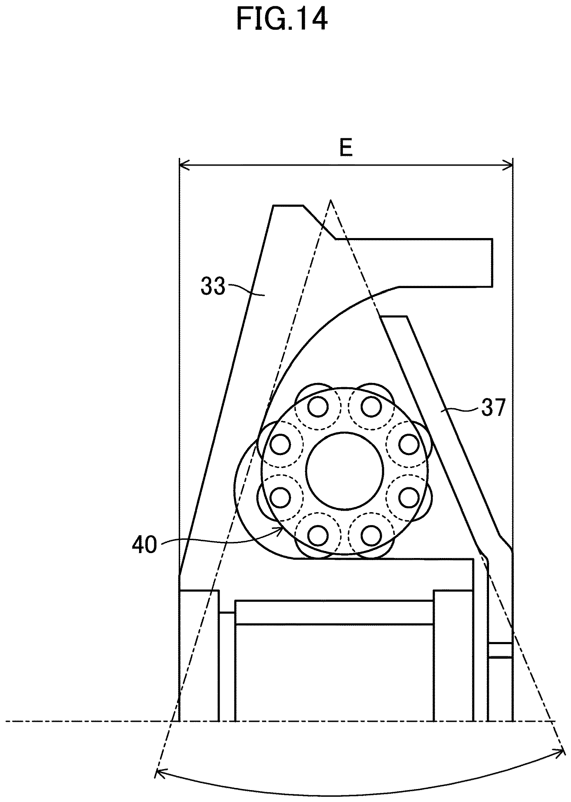

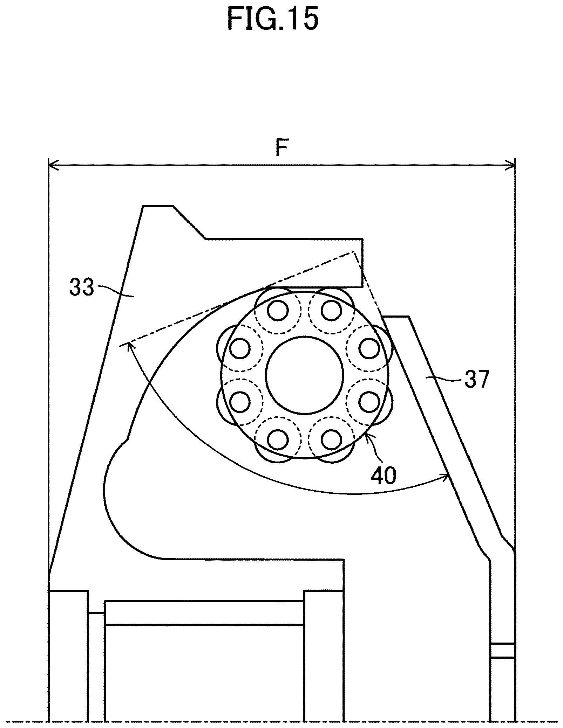

Hereinafter, a second embodiment of the present disclosure will be described with reference to the drawings.

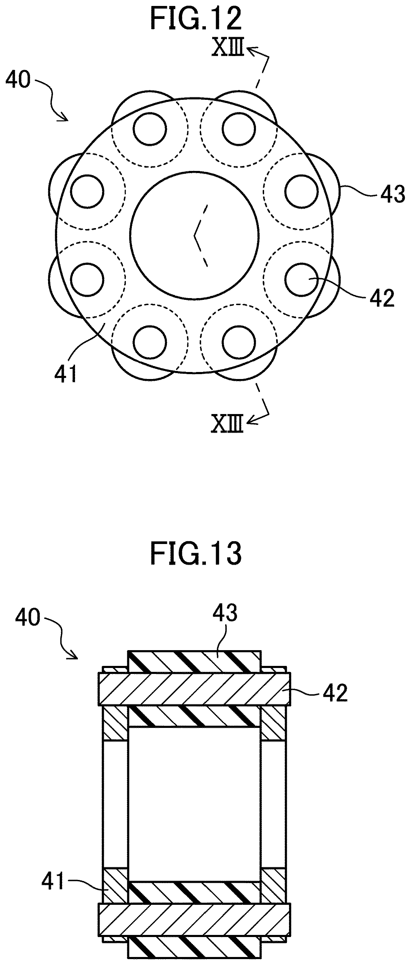

FIG. 12 is a view schematically illustrating an exemplary weight device 40 of the present embodiment. Furthermore, FIG. 13 is a cross-sectional view taken along line XIII-XIII in FIG. 12.
As illustrated in FIGS. 12 and 13, the weight device 40 includes two side plate parts 41 provided in parallel to each other, a plurality of shafts 42 provided to connect the side plate parts 41 to each other, and rolling bodies 43 provided to the shafts 42. The side plate part is circular and has an annular shape in which a circular hole concentric with the outer diameter of the side plate part is opened. Furthermore, eight shafts 42 are provided and are equally disposed on the circumference of a circle concentric with the outer diameter of the side plate part 41. Moreover, all the shafts 42 are provided with the rolling bodies 43, respectively. The diameter of the circle, in which the shaft 42 is disposed, for example, is 15 mm, the diameter of the rolling body, for example, is 5 mm, and the thickness (the length of the shaft 42) of the weight device 40, for example, is 12.6 mm. These dimensions are an example and may be set according to a transmission or the like to be used.
The materials of the side plate part 41, the shaft 42, and the rolling body 43 are the same as those of the weight device 10 of the first embodiment.
Next, FIGS. 14 and 15 illustrate states in which the weight device 40 of the present embodiment is used for a belt-type automatic transmission. FIGS. 14 and 15 correspond to FIGS. 4 and 5 in the first embodiment, and illustrate states in which the number of revolutions of an engine is small and large.
For the weight device 40, the different rolling bodies 43 can come in contact with the movable sheave 33 and the ramp plate 37. As a consequence, when the weight device 40 moves outward in the radial direction of the automatic transmission (moves from the position of FIG. 14 to the position of FIG. 15), the rolling bodies 43 can move while rolling on the movable sheave 33 and the ramp plate 37. Accordingly, the weight device 40 can move by a small rolling resistance.
In the case of FIG. 14 where the number of revolutions is small, a distance E between predetermined positions of the movable sheave 33 and the ramp plate 37 is 37 mm, similarly to FIG. 4. On the other hand, in the case of FIG. 15 where the number of revolutions is large, a distance F between the same positions is 51 mm. Accordingly, a movement distance of the movable sheave 33 in an axial length direction is 14 mm. This is larger than 12 mm, which is the movement distance in the comparative example illustrated in FIGS. 6 and 7, by 2 mm. As a consequence, the pulley diameter of the automatic transmission is changed and the speed ratio also becomes large, so that it is possible to reduce the number of revolutions of the engine during high-speed running and to improve fuel efficiency.
Furthermore, since a plurality of (eight in a specific example) shafts 42 are equally disposed on the circumference, there is no direction restriction when the weight device 40 is attached to the automatic transmission, so that the weight device 40 can be easily attached.
The number of shafts 42 (and rolling bodies 43) is not limited to eight in the example. When the number of shafts 42 is about 6, the effect that there is no direction restriction during the aforementioned attachment is achieved. An upper limit depends on the dimensions of the weight device 40, the shaft 42, and the rolling body 43, but is practically about 12.
In the case of using the weight device 40 of the present embodiment, when the number of revolutions of the engine is large (FIG. 15), the "wedge angle" is larger than that of the conventional weight device 20 (FIG. 7). Accordingly, thrust that is applied to the movable sheave 33 is reduced, but since a priority may also be given to the improvement of a speed ratio, such a configuration may be considered.

(Third Embodiment)

Hereinafter, a third embodiment of the present disclosure will be described with reference to the drawings.

(Basic Configuration Example of Weight Device)

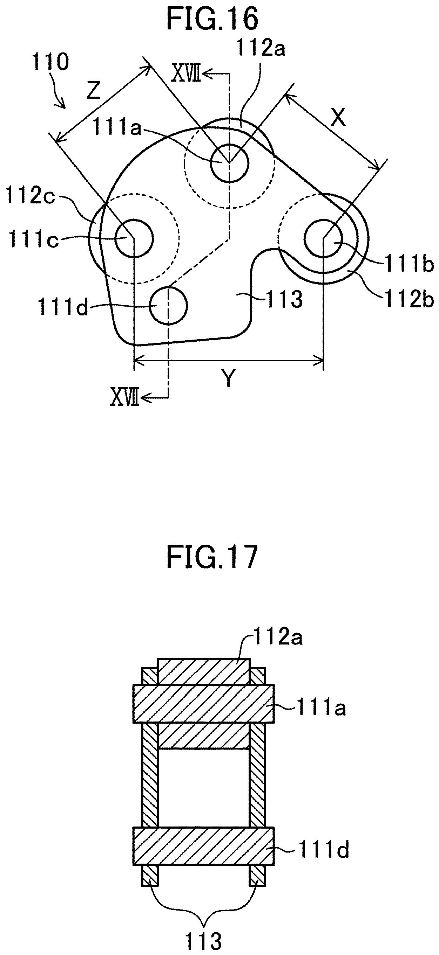

FIG. 16 is a view schematically illustrating an exemplary weight device 110 of the present embodiment Furthermore, FIG. 17 is a cross-sectional view taken along line XVII-XVII in FIG. 16.
As illustrated in FIGS. 16 and 17, the weight device 110 includes a first shaft 111a, a second shaft 111b, a third shaft 111c, a fourth shaft 111d, a shaft fixing member 113 for fixing these shafts in a parallel manner, a first rolling body 112a, a second rolling body 112b, and a third rolling body 112c, wherein the first shaft 111a, the second shaft 111b, the third shaft 111c, and the fourth shaft 111d will be hereinafter simply referred to as a shaft 111 indicating one or a plurality of shafts, and the first rolling body 112a, the second rolling body 112b, and the third rolling body 112c will be hereinafter simply referred to as a rolling body 112 indicating one or a plurality of rolling bodies. The fourth shaft 111d is not provided with any rolling body.

In the present embodiment, the shaft fixing member 113 is a plate member, and two shaft fixing members 113 are provide so as to hold the rolling body 112 provided on the shaft 111 from both sides. In this example, the shaft 111 is passed through a hole formed in the shaft fixing member 113 and is fixed by partial caulking. Furthermore, the rolling body 112 is rotatable by a rolling bearing, a sliding bearing or the like with respect to the shaft 111. The three rolling bodies 112a, 112b, and 112c are independently rotatable.

There are various types of materials for the constituent members of the weight device 110, and for example, the shaft fixing member 113 may be made of a pressed steel plate or a stainless steel, the shaft 111 may be made of a carbon steel, and the rolling body 112 may be made of polyamide resin.

Furthermore, although not illustrated in the drawing, each shaft fixing member 113 may be provided, on the outer side surface thereof (a surface opposite to the rolling body 112), with a sliding member made of resin. For example, a resin sheet may also be attached. When the weight device 110 operates, since the shaft fixing member 113 also comes in contact with an automatic transmission, it is possible to improve performance by reducing friction at the contact point.

(Application to Belt-type Automatic Transmission)

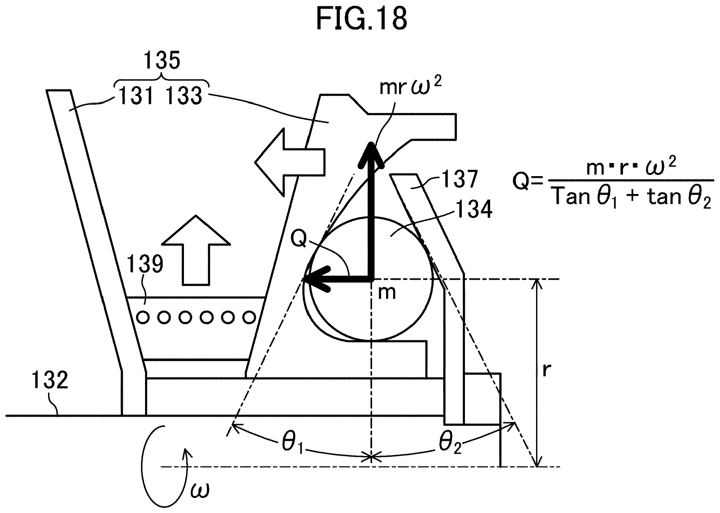

Next, a belt-type automatic transmission using a weight device will be described. FIG. 18 is a cross-sectional view schematically illustrating a part of a belt-type automatic transmission 130.

The belt-type automatic transmission 130 includes a pulley 135 that rotates about a rotating shaft 132, a V-belt 139 wound around a V-shaped groove of the pulley 135, a weight device 134, and a ramp plate 137. The pulley 135 includes a fixed sheave 131 fixed to the rotating shaft 132, and a movable sheave 133 movable in an axial direction of the rotating shaft 132. The pulley 135, the ramp plate 137 or the like have a rotation-symmetrical shape about the rotating shaft 132, but in this section, only one side of the rotating shaft 132 is illustrated. Furthermore, the weight device 134 is represented by a simple circle, which is temporarily indicated by a circle in order to explain the belt-type automatic transmission 130 without limiting the shape of the weight device.

The ramp plate 137 having an approximately disc shape is fixed to the rotating shaft 132 with a gap capable of holding the weight device 134 on the rear side of the movable sheave 133. The gap between the movable sheave 133 and the ramp plate 137 is narrowed outward in the radial direction of the pulley 135 (upward in the drawing).

In such a belt-type automatic transmission 130, when the number of revolutions of an engine connected to the rotating shaft 132 increases, the weight device 134 moves outward in the radial direction of the pulley 135 by the centrifugal force. In this way, the movable sheave 133 pressed to the weight device 134 moves in a direction (the left side in FIG. 18) in which the width of the V-shaped groove is narrowed in the pulley 135. As a consequence, the V-belt 139 moves outward in the radial direction of the pulley 135 and its winding radius increases, so that stepless speed change is automatically performed.

Here, thrust Q by which the weight device 134 moves the movable sheave 133 depends on a mass of the weight device 134, a distance r from the center of rotation to the center of gravity of the weight device 134, the number co of revolutions, and a wedge angle. The wedge angle is an angle formed by the tangent of the weight device 134 and the movable sheave 133 and the tangent of the weight device 134 and the ramp plate 137. In FIG. 18, the wedge angle is divided into an angle $\theta_1$ on the side of the ramp plate 137 and an angle $\theta_2$ on the side of the movable sheave 133 by a line perpendicular to the rotating shaft, and is $\theta_1 + \theta_2$. Since the ramp plate 137 comes in contact with the weight device 134 on a flat surface, $\theta_1$ is constant regardless of the position of the weight device 134. On the other hand, since the movable sheave 133 comes in contact with the weight device 134 on a curved surface, $\theta_2$ varies depending on the position of the weight device 134.

As illustrated in FIG. 18, the thrust Q is expressed by

$$Q = mr\omega^2/(\tan\theta_1 + \tan\theta_2) \ldots\ldots \text{Equation 1}$$

Accordingly, the larger the mass m, the distance r, and the number co of revolutions, and the smaller the wedge angle, the larger the thrust Q.

Furthermore, the larger the movement amount of the movable sheave 133 with the movement of the weight device 134, the larger the movement amount of the V-belt 139 outward in the radial direction, which means that the speed ratio of the speed change becomes large. Accordingly, in order to increase the speed ratio, it is better to increase the movement amount of the movable sheave 133.

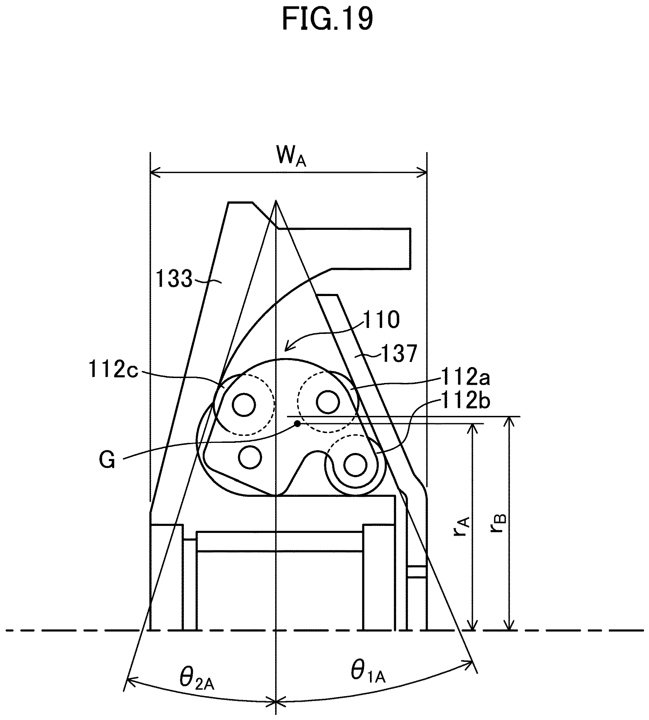

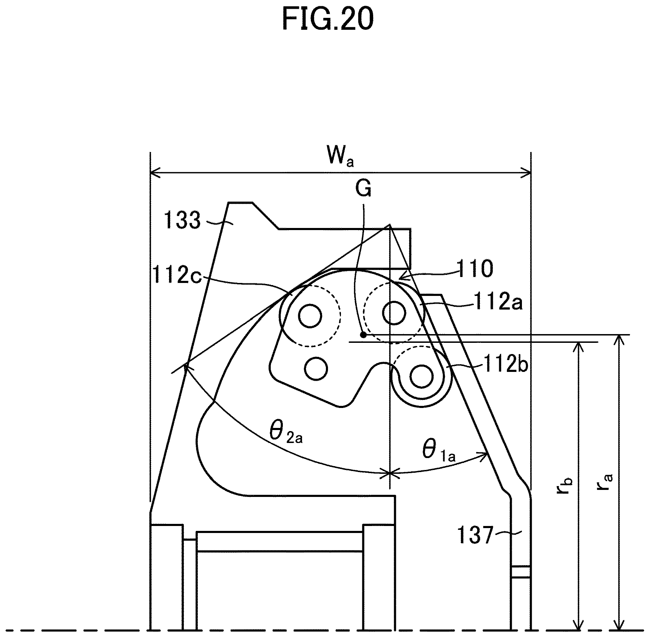

States in which the weight device 110 of the present embodiment (example) is used for the aforementioned belt-type automatic transmission are illustrated in FIGS. 19 and 20. FIGS. 19 and 20 illustrate an enlargement of the movable sheave 133, the ramp plate 137, and the weight device 110 disposed in a gap therebetween. Furthermore, FIG. 19 illustrates a low ratio state (a state in which the number of revolutions of the engine is small), and the weight device 110 is located on a side near the shaft (downward in the drawing). On the other hand, FIG. 20 illustrates a high ratio state (a state in which the number of revolutions of the engine is large), and the weight device 110 moves outward in the radial direction of the pulley (upward in the drawing) and the movable sheave 133 moves in a direction away from the ramp plate 137.

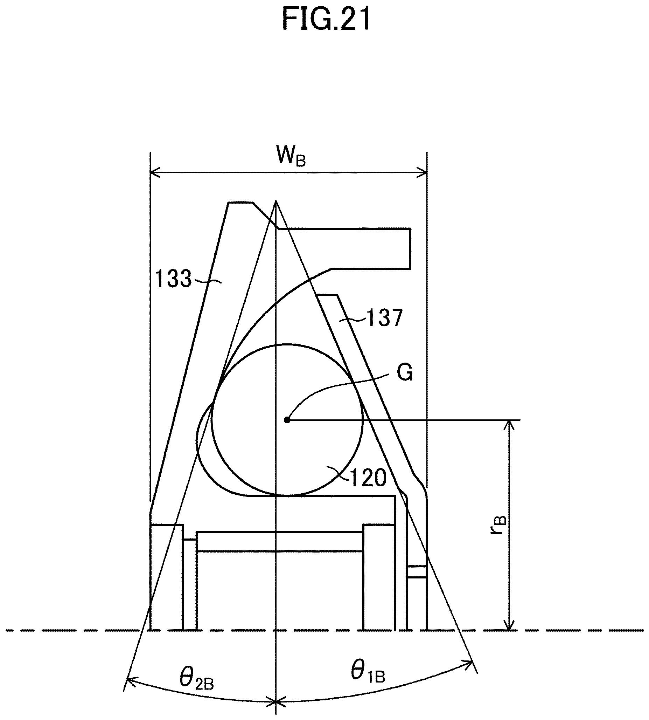

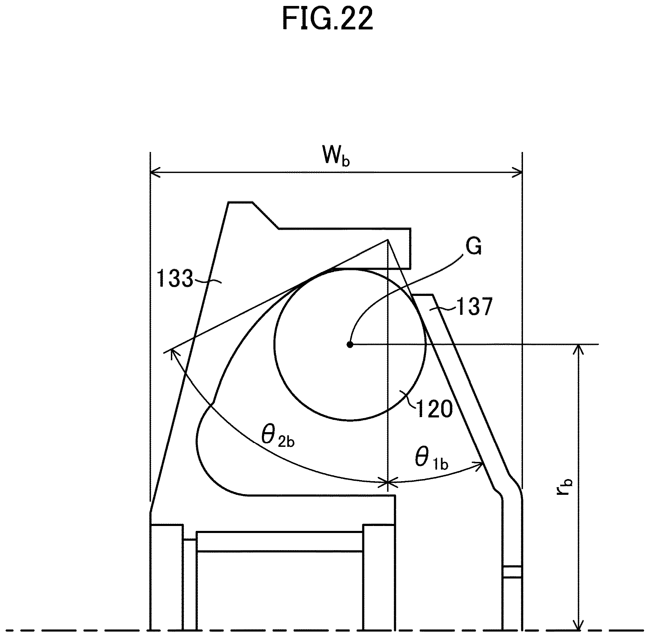

Furthermore, FIGS. 21 and 22 illustrate, as comparative examples, states in which a cylindrical weight device 120 is used for the same belt-type automatic transmission. FIG. 21 illustrates a low ratio state and FIG. 22 illustrates a high ratio state.

Next, a description will be provided for a case where the weight device 110 of the present embodiment includes a plurality of shafts 111 and rolling bodies 112. As illustrated in FIG. 19, in the case of the weight device 110 of the example, the different rolling bodies 112 come in contact with the movable sheave 133 and the ramp plate 137. Specifically, the third rolling body 112c comes in contact with the movable sheave 133 and the first and second rolling bodies 112a and 112b come in contact with the ramp plate 137. Accordingly, when the weight device 110 moves outward in the radial direction due to an increase in the number of revolutions of the engine, the third rolling body 112c can roll on the movable sheave 133 and the first and second rolling bodies 112a and 112b can roll on the ramp plate 137. As a consequence, the weight device 110 can move with a small rolling resistance.

On the other hand, in the case of the comparative example of FIG. 21, the weight device 120 has a simple cylindrical shape and comes in contact with both the movable sheave 133 and the ramp plate 137. As a consequence, even though the weight device 120 of the comparative example can roll with respect to one of the movable sheave 133 and the ramp plate 137, the weight device 120 slides while rotating in an opposite direction with respect to the other one at that time, resulting in an increase in resistance to movement.

The same applies to the cases of FIGS. 20 and 22 illustrating the high ratio state. In accordance with the weight device 110 of the present embodiment, each of the rolling bodies 112 can roll on the movable sheave 133 or the ramp plate 137 during a speed change. The weight device 120 of the comparative example can roll with respect to one of the movable sheave 133 and the ramp plate 137, but slides while rotating in an opposite direction with respect to the other one.

As described above, the weight device 110 of the example can move with a smaller resistance and the response of the movable sheave 133 is quick, so that the response of acceleration and deceleration is improved.

Next, a description will be provided for a case where the weight device 110 of the embodiment can individually set a plurality of numerical values related to the performance of the belt-type automatic transmission.

The weight device 120 of the comparative example has a cylindrical shape. In such a case, the wedge angle and the position of the center of gravity with respect to the weight device 120 and the movement amount of the movable sheave 133 (a difference between $W_b$ and $W_B$ illustrated in FIG. 21 and FIG. 22) are all determined by the diameter of the weight device 120. That is to say, there is no degree of freedom for setting the wedge angle, the position, and the movement amount independently for the same belt-type automatic transmission.

On the other hand, since the weight device 110 of the example includes the rolling bodies 112, there is the degree of freedom for individually setting, e.g., the wedge angle, the position of the center of gravity, and the movement amount of the movable sheave 133 by changing, e.g., the arrangement, and diameters of the rolling bodies 112.

Specific setting of the weight device disposed in the belt-type automatic transmission will be described below.

For the case of the low ratio, the example (FIG. 19) and the comparative example (FIG. 21) will be compared with each other. For the distance between predetermined positions of the ramp plate 137 and the movable sheave 133, the distance $W_A$ in the example and the distance $W_B$ in the comparative example are equal to each other. Furthermore, for an angle of the wedge angle on the movable sheave 133 side, an angle $\theta_{2A}$ in the example is larger than an angle $\theta_{2B}$ in the comparative example. For an angle of the wedge angle on the ramp plate 137 side, since the ramp plate 137 comes in contact with the weight device at a constant angle, the angle is always constant regardless of the shape and position of the weight device. Accordingly, an angle $\theta_{1A}$ in the example and an angle $\theta_{1B}$ in the comparative example are equal to each other. Moreover, for a distance from the center of the rotating shaft to the center of gravity G, a distance $r_A$ in the example is smaller than a distance $r_B$ in the comparative example.

As a consequence, when the number co of revolutions is the same, thrust $Q_A$ in the example is smaller than thrust $Q_B$ in the comparative example from Equation 1 above. The above is expressed by the following Equation.

$$W_A = W_B$$

$$\theta_{2A} > \theta_{2B}$$

$$\theta_{1A} = \theta_{1B}$$

$$r_A < r_B$$

$$Q_A < Q_B$$

In Equation above, in the thrust, since $Q_A < Q_B$, the example is maintained at the low ratio side to the high number co of revolutions, resulting in an increase in acceleration performance at the start of a speed change.

Next, for the case of the high ratio, the example (FIG. 20) and the comparative example (FIG. 22) will be compared with each other. For the distance between predetermined positions of the ramp plate 137 and the movable sheave 133, the distance $W_a$ in the example is larger than the distance $W_b$ in the comparative example. For an angle of the wedge angle on the movable sheave 133 side, an angle $\theta_{2a}$ in the example is smaller than an angle $\theta_{2b}$ in the comparative example. Since there is no change in an angle of the wedge angle on the ramp plate 137 side, an angle $\theta_{1a}$ in the example and an angle $\theta_{1b}$ in the comparative example are equal to each other. Moreover, for a distance from the center of the rotating shaft to the center of gravity G, a distance $r_a$ in the example is larger than a distance $r_b$ in the comparative example.

As a consequence, when the number co of revolutions is the same, thrust $Q_a$ in the example is larger than thrust $Q_b$ in the comparative example from Equation 1 above. The above is expressed by the following Equation.

$$W_a > W_b$$

$$\theta_{2a} < \theta_{2b}$$

$$\theta_{1a} = \theta_{1b}$$

$$r_a > r_b$$

$$Q_a > Q_b$$

In the thrust, since $Q_a > Q_b$, since the example is easily maintained at the high ratio side even in the case of the same number of revolutions, the number of revolutions of the engine for a vehicle speed is decreased, so that fuel-saving performance is improved.

It is noted that the weight device 110 of the present embodiment can be simply used in place of the conventional weight device. That is to say, design change, modification or the like for using the weight device 110 of the present embodiment are not required for the belt-type automatic transmission.

(More Specific Configuration of Weight Device)

Next, a description will be provided for the arrangement of the shafts 111 and the rolling bodies 112, the shape of the shaft fixing member 113, the position of the center of gravity or the like in the weight device 110.

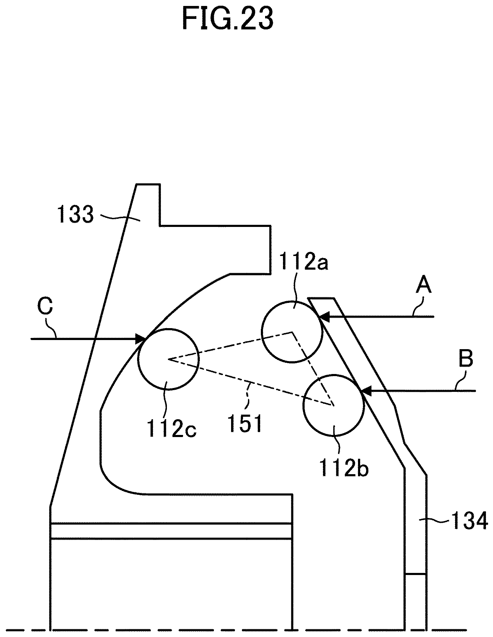

FIG. 23 illustrates the state of the weight device 110 disposed in the belt-type automatic transmission 130 during a high ratio. FIG. 23 does not illustrate the shaft fixing member 113 and the shaft 111, and illustrates the rolling bodies 112 and a triangle formed by the centers of the shafts 111 corresponding to the rolling bodies 112. Furthermore, FIG. 23 illustrates a load applied to each rolling body 112 from the movable sheave 133 or the ramp plate 137. That is to say, a load A and a load B are respectively applied to the first rolling body 112a and the second rolling body 112b from the ramp plate 137 toward the movable sheave 133 side. Furthermore, a load C is applied to the third rolling body 112c from the movable sheave 133 toward the ramp plate 137 side. The load is applied at a contact point between the rolling body 112 and the movable sheave 133 or the ramp plate 137.

In the example illustrated in FIG. 23, the load C is located between the load A and the load B with respect to the movement direction (the vertical direction of the drawing) of the weight device 110. In such a case, the load C is supported by both the load A and the load B, so that the weight device is stable.

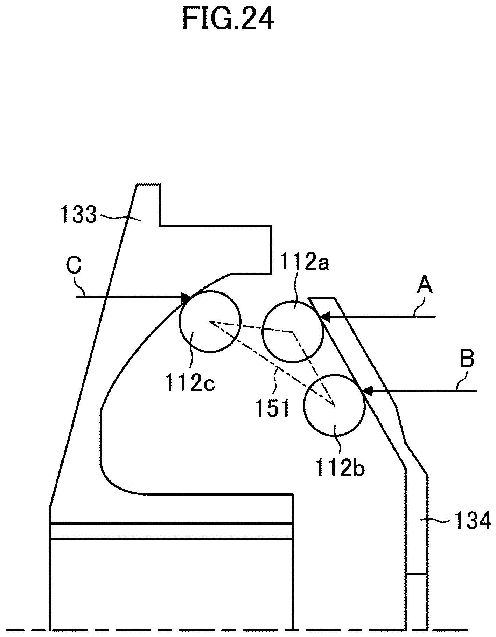

However, when the arrangement of the rolling bodies 112 is changed and the third rolling body 112c is located above the position in FIG. 23 as illustrated in FIG. 24, the load B is not able to appropriately support the load C and force is applied to turn the weight device 110 (rotate the weight device 110 in the clockwise direction in the drawing). As a consequence, the weight device 110 is easily turned. When the weight device is turned, the belt-type automatic transmission is not able to properly operate.

FIGS. 23 and 24 emphasize the arrangement of the shafts 111 in order to facilitate the understanding of differences.

From the above, in order to be able to implement that the loads as illustrated in FIG. 23 are applied, the arrangement of the shafts 111 and the rolling bodies 112 in the weight device 110 is set.

In FIG. 16, it is assumed that a distance between the center of the first shaft 111a and the center of the second shaft 111b is X, a distance between the center of the second shaft 111b and the center of the third shaft 111c is Y, and a distance between the center of the third shaft 111c and the center of the first shaft 111a is Z. In such a case, in order to obtain the load position as illustrated in FIG. 23 by disposing the weight device 110 in the belt-type automatic transmission 130, it is preferable to set X to be 0.52 times or more of Y, it is more preferable to set X to be 0.54 times or more of Y, and it is further preferable to set X to be 0.58 times or more of Y. Preferably, the distance Y is longer than the distance X and the distance Z. More preferably, the distance Z is longer than the distance X.

Furthermore, particularly, when the diameters of the rolling bodies 112 are equal to one another, it is preferable that the triangle formed by the centers of the first to third shafts 111a to 111c is an obtuse triangle in which an angle corresponding to the first shaft 111a is an obtuse angle. This is preferable because the rolling bodies 112 come in contact with the ramp plate and the movable sheave, respectively, and increase the movable range of the movable sheave. Furthermore, in order to achieve the positional relation of the loads illustrated in FIG. 23, it is preferable that the angle corresponding to the first shaft 111a is small. From the above, it is preferable that the angle corresponding to the first shaft 111a is in the range of 90° or more and 120° or less.

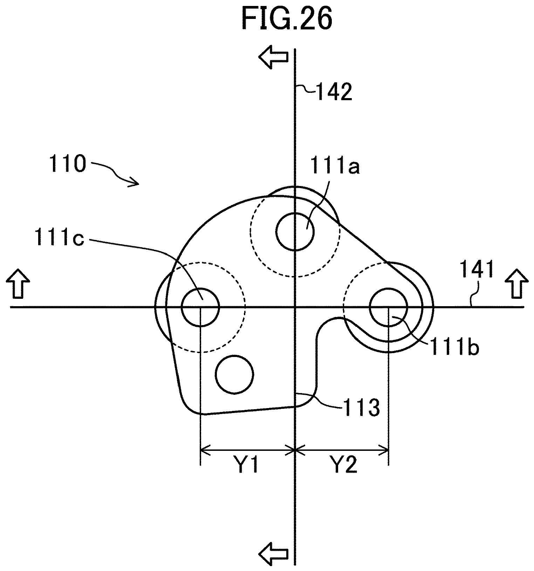

Furthermore, as illustrated in FIG. 26, a straight line 141 connecting the center of the second shaft 111b to the center of the third shaft 111c, and a straight line 142 perpendicular to the straight line 141 and passing through the center of the first shaft 111a are considered. In such a case, it is preferable that in the direction of the straight line 142, a distance $Y_2$ from the center of the second shaft 111b to the position of the center of the first shaft 111a (that is, the position of the straight line 142) is smaller than a distance $Y_1$ from the position of the center of the first shaft 111a to the position of the center of the third shaft 111c.

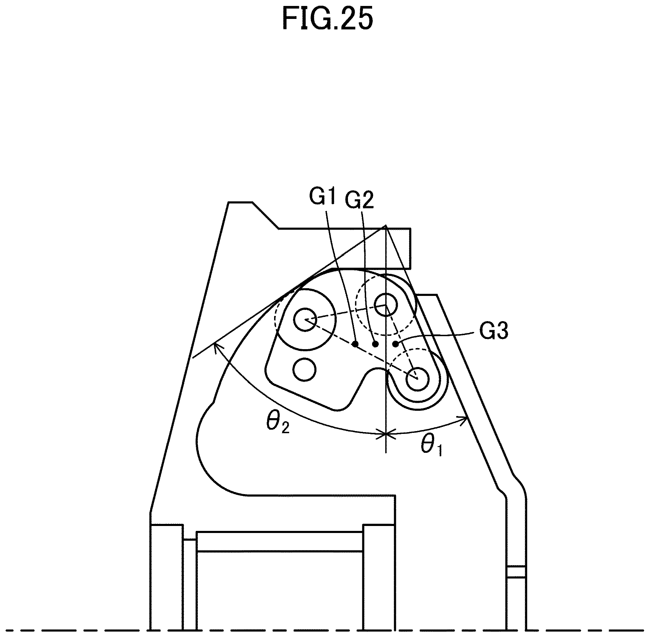

Furthermore, there is a difference in the possibility of occurrence of turning by the position of the center of gravity of the weight device 110. This is illustrated in FIG. 25. FIG. 25 illustrates a state of the weight device 110 disposed in the belt-type automatic transmission 130 during a high ratio. FIG. 25 does not illustrate the shaft fixing member and the shafts 111 and illustrates only the rolling bodies 112.

The position of the center of gravity of the weight device 110 differs depending on the arrangement of the rolling bodies 112, and also differs depending on the shape or the like of the shaft fixing member. During the high ratio, it is preferable that the center of gravity is located on a side near the movable sheave 133 (the left side in the drawing), and it is more preferable that the center of gravity is located on a radial outside of the pulley 135 (the upper side in the drawing). Furthermore, it is preferable to avoid at least the center of gravity being located adjacent to the ramp plate 137 with respect to the center of the wedge angle.

This is because, for the wedge angle, the ramp plate 137 side ($\theta_1$) is smaller than the movable sheave 133 side ($\theta_2$), it is easy to instruct rotation to turn to the ramp plate 137 side (clockwise direction in FIG. 20).

For example, when the center of gravity is located at the position of G1 in FIG. 25, turning is less likely to occur. On the other hand, when the center of gravity is further located at the position of G2 on the ramp plate 137 side, the turning may occur. Moreover, when the center of gravity is located at the position of G3 adjacent to the ramp plate 137 with respect to the center of the wedge angle, the turning easily occurs.

When the weight device 110 is disposed in the belt-type automatic transmission 130, the position of the center of gravity of the weight device 110, in which it is possible to reduce the turning, is illustrated in FIG. 26. It is preferable that the center of gravity of the weight device 110 is located on the side of the third shaft 111c from the straight line 142 with respect to the direction of the straight line 141. Moreover, it is preferable that the center of gravity of the weight device 110 is located on the side of the first shaft 111a from the straight line 141.

When the center of gravity is located at such a position in the weight device 110, it is preferable because the turning is suppressed in the case where the weight device 110 is used for the belt-type automatic transmission 130.

The position of the center of gravity in the weight device 110 is also affected by the arrangement of the shafts 111 and the rolling bodies 112. However, the positional relation of the rolling bodies 112 is restricted in order to obtain the positional relation when the weight device 110 is used for the belt-type automatic transmission 130. In this regard, the position of the center of gravity is set by the shape of the shaft fixing member 113.

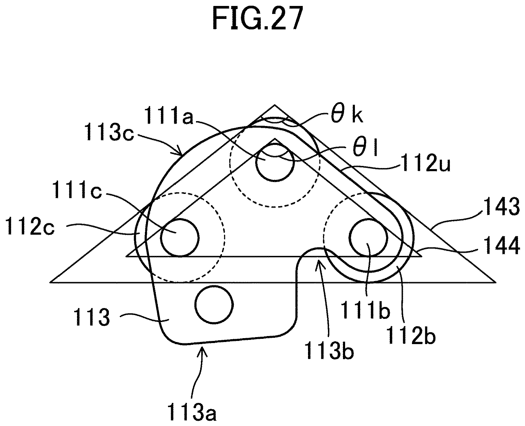

FIG. 27 illustrates the same weight device 110 as in FIG. 16. The position of the center of gravity can be set by adjusting the shape of the shaft fixing member 113 that fixes the shafts 111 at predetermined positions. For example, when viewed in parallel to the shafts 111, a part protruding outwardly like a raised part 113a is provided, so that the center of gravity can be set to the side of the raised part 113a. A raised part 113c is also the same. In contrast, when a part recessed inwardly like a recessed part 113b is provided, the center of gravity can be set to a side opposite to the recessed part 113b.

It is preferable that the raised part is provided between the first shaft 111a and the third shaft 111c, like the raised part 113c. Furthermore, it is preferable that the raised part is provided on a side near the third shaft 111c between the second shaft 111b and the third shaft 111c, like the raised part 113a. When the raised part is provided at such a position, it is effective to set the center of gravity to the third shaft 111c side from the straight line 142 in FIG. 26. For the raised part 113c, it is also effective to set the center of gravity to the first shaft 111a side from the straight line 141.

The arrangement of the recessed part is not illustrated in FIG. 27, but it is preferable that the recessed part is provided at a part between the first shaft 111a and the second shaft 111b. Furthermore, it is preferable that the recessed part is provided on a side near the second shaft 111b between the second shaft 111b and the third shaft 111c, like the recessed part 113b. When the recessed part is provided at such a position, it is effective to set the center of gravity to the third shaft 111c side from the straight line 142 in FIG. 26. For the recessed part 113b, it is also effective to set the center of gravity to the first shaft 111a side from the straight line 141.

A triangle 143, which surrounds the first to third rolling bodies 112a to 112c and has each side coming in contact with the outer peripheries of two rolling bodies 112, is considered. When viewed in parallel to the shaft 111, when the shaft fixing member 113 protrudes outward beyond the triangle between the rolling bodies 112, if the weight device 110 is disposed in the belt-type automatic transmission 130, the shaft fixing member 113 may come in contact with the ramp plate 137 or the movable sheave 133. However, it is effective to allow the raised part for adjusting the position of the center of gravity to be located outside the triangle 143 between two rolling bodies 112.

Furthermore, the recessed part 113b can also be considered as a part where the shape of the shaft fixing member 113 simply viewed in parallel to the shaft 111 is recessed inwardly. Meanwhile, a triangle 144, which surrounds the first to third shafts 111a to 111c including the rolling bodies 112 and has each side coming in contact with two shafts 111 of these three shafts, may be provided and used as a reference. That is, when the recessed part 113b is formed between the two shafts 111 so as to be recessed inward beyond the triangle 144, it is effective to set the position of the center of gravity.

The raised parts 113a and 113b and the recessed part 113b are not excluded from being disposed at positions other than the aforementioned positions. Particularly, depending on a relation with a turning regulation function to be described later, the raised parts 113a and 113c and the recessed part 113b may be disposed at various positions.

Furthermore, by providing a hole in the shaft fixing member 113, the center of gravity can be adjusted.

Preferably, an angle $\theta_k$ of an interior angle corresponding to the first shaft 111a in the triangle 143 exceeds 60°, and more preferably, the angle $\theta_k$ is an obtuse angle. Furthermore, an angle $\theta_1$ of an interior angle $\theta$ corresponding to the first shaft 111a in the triangle 144 exceeds 60°, and more preferably, the angle $\theta_k$ is an obtuse angle. This is a preferred configuration because the respective rolling bodies 112 appropriately come in contact with the ramp plate 137 or the movable sheave 133, achieve the positional relation of the loads as illustrated in FIG. 23, and increase the movable range of the movable sheave 133. When the outer diameters of the shafts 111 are equal to one another and the outer diameters of the rolling bodies 112 are equal to one another, the angle $\theta_k$ and the angle $\theta_1$ are equal to each other. When the outer diameters of the shafts 111 are different from one another and the outer diameters of the rolling bodies 112 are different from one another, there is a case where the angle $\theta_k$ and the angle $\theta_1$ are different from each other.

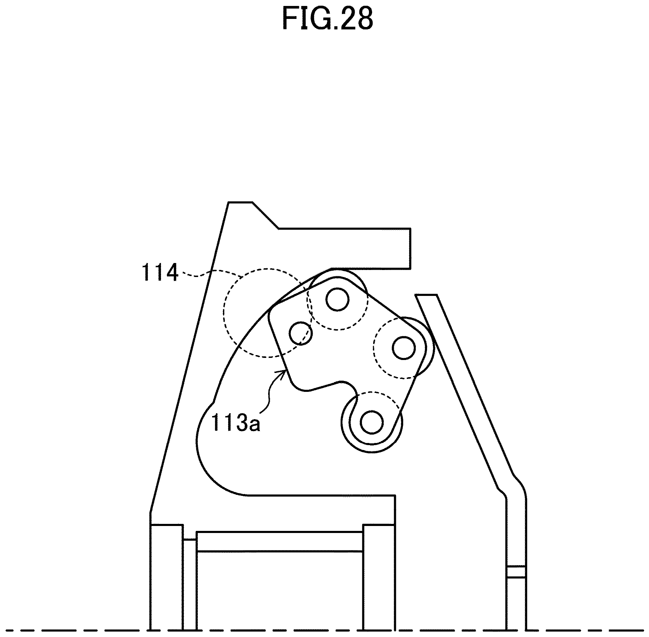

Next, with reference to FIG. 28 to FIG. 30, it will be explained that the raised parts 113a and 113c are effective in reducing the turning and returning the orientation of the weight device 110.

During the high ratio, the orientation of the weight device 110 illustrated in FIG. 20 is appropriate. On the other hand, FIG. 28 illustrates a state in which the weight device 110 rotates (turns) in the clockwise direction in the drawing from the appropriate orientation by an angle, and the raised part 113a comes in contact with the movable sheave 133 at a contact point 114 indicated by the circle of the broken line.

By the contact, the weight device 110 is substantially prevented from further rotating in the clockwise direction from this position and returns to the appropriate orientation by repulsion force.

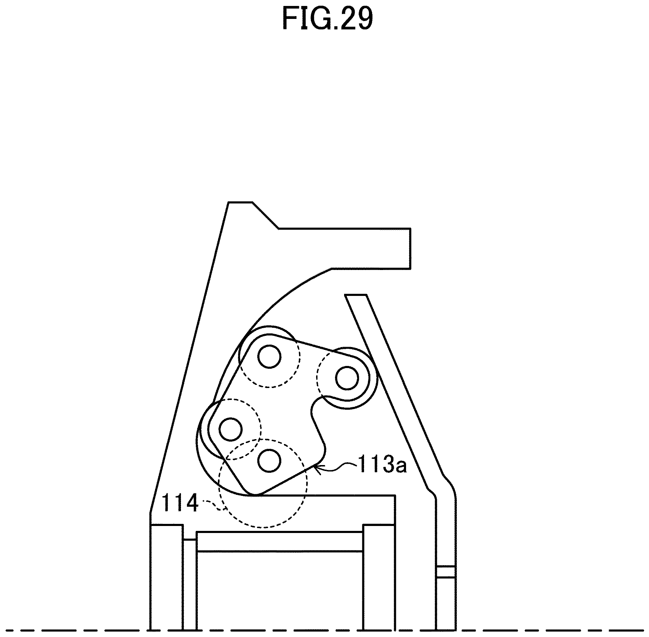

FIG. 29 illustrates a state in which the weight device 110 rotates (turns) in the counterclockwise direction in the drawing from the appropriate orientation (see FIG. 19) by an angle at a position during a low ratio, and the raised part 113a comes in contact with the movable sheave 133 at a contact point 114. By the contact, the weight device 110 is substantially prevented from further rotating in the counterclockwise direction from this position and returns to the appropriate orientation.

In the above, if the raised part 113a is not provided, the shaft fixing member 113 does not come in contact with the movable sheave 133 and there is no action of returning the orientation of the weight device 110.

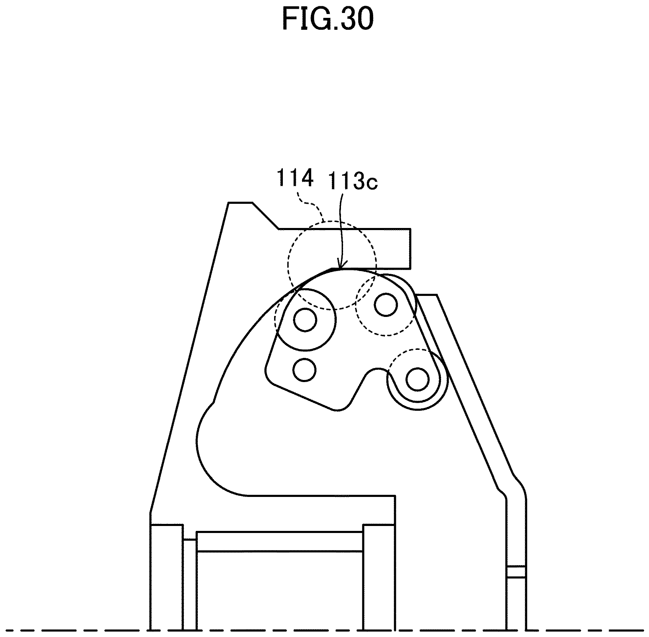

Next, FIG. 30 illustrates that the raised part 113c provided between the first shaft 111a and the third shaft 111c comes in contact with the ramp plate 137 at a contact point 114 and performs a function of controlling the orientation of the weight device 110.

As described above, the shaft fixing member 113 has a shape protruding outward at a predetermined position, so that it can be used for regulating and returning the orientation of the weight device 110 in the belt-type automatic transmission 130.

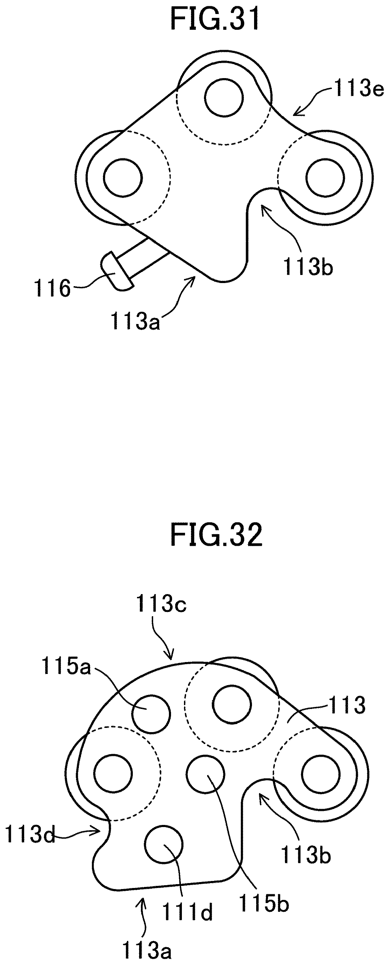

FIGS. 31 to 33 illustrate other examples of the weight device of the present embodiment.

In the case of FIG. 31, a recessed part 113e is provided between the first shaft 111a and the second shaft 111b. The recessed part 113e also contributes to the adjustment of the position of the center of gravity.

Furthermore, in the weight device of FIG. 31, a pin 116 is provided in the vicinity of the third rolling body 112c so as to protrude from the shaft fixing member 113 when viewed in parallel to the shaft 111. The pin 116 contributes to the adjustment of the position of the center of gravity as a weight and contributes to the control and return of the orientation of the weight device 110, similarly to the raised part 113a.

In the case of FIG. 32, the shaft fixing member 113 is provided with the raised part 113a and a recessed part 113d is formed in the vicinity of the third shaft 111c. In this way, the orientation control function of the raised part 113a is obtained and the position of the center of gravity is adjusted by the recessed part 113d. Moreover, in the weight device of FIG. 32, the shaft fixing member 113 is formed with through holes 115a and 115b. These through holes 115a and 115b have an effect of adjusting the weight and the position of the center of gravity of the weight device.

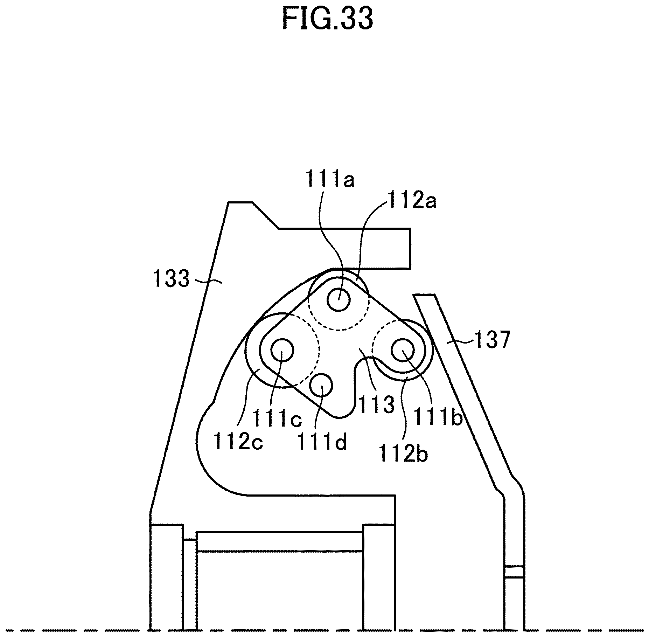

FIG. 33 illustrates a case where there is a difference in the diameters of the rolling bodies 112. Specifically, the first rolling body 112a and the second rolling body 112b have the same diameter, and the third rolling body 112c has a diameter larger than those of the first rolling body 112a and the second rolling body 112b. By so doing, it is possible to prolong the life of the weight device 110 by the following reason.

The life of the weight device 110 is determined by the abrasion of the rolling body 112 as a main factor. Two rolling bodies, i.e., the first rolling body 112a and the second rolling body 112b receive loads from the ramp plate 137, and the third rolling body 112c receives a load of the total size of the loads. Therefore, when the diameters of the rolling bodies 112 are the same, the third rolling body 112c (the movable sheave 133 side) receives a large Hertzian stress. When the diameter of the third rolling body 112c is made large, the magnitudes of the Hertzian stress received by the first rolling body 112a, the second rolling body 112b, and the third rolling body 112c become equal to one another, so that the speed of the abrasion of each rolling body 112 can be approximated. As a consequence, it is possible to prolong the life of the weight device 110 by avoiding fast abrasion or the like of only one rolling body 112.

The diameters of the individual rolling bodies may have other combinations. When the diameters are different from one another, since the weights are also different from one another, it can be used to set the center of gravity of the weight device.

In order to adjust the position of the center of gravity, a weight may be attached to a desired position of the shaft fixing member 113.

Furthermore, a shaft 111 (a fourth shaft 111d or the like) having no rolling body 112 can be used to adjust the center of gravity. Moreover, when assembling the weight device 110, if there are three shafts 111, twisting may occur but the shaft 111 having no rolling body is provided, so that it is possible to reduce the twisting.

So far, the example in which three rolling bodies are provided has been described; however, four or more rolling bodies are not excluded from being provided.

(Example)

Hereinafter, as an example, measurement results of the weight device 110 illustrated in FIG. 16 and the conventional weight device having a cylindrical shape are shown.

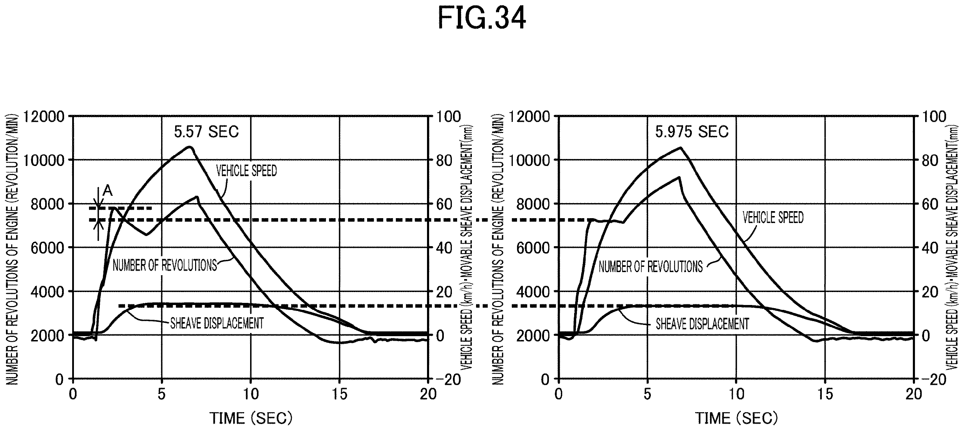

FIG. 34 illustrates a result obtained through measurement of a time change with respect to the vehicle speed, the number of revolutions of the engine, and the displacement of the variable sheave by using the weight devices of the example and the comparative example for the belt-type automatic transmission of a bicycle. The graphs are illustrated side by side for comparison, wherein the left graph indicates the example and the right graph indicates the comparative example. In both the example and the comparative example, the opening degree of the engine is 100%.

First, a time to reach a maximum speed (about 85 km/h) is 5.57 seconds in the example and is 5.975 seconds in the comparative example. That is, the time to reach the maximum speed is reduced by 6.7% and acceleration performance is improved.

Furthermore, the number of revolutions at the start of an automatic speed change is about 7,800 rotations/min in the example and is about 7,200 rotations/min in the comparative example, and as indicated by A in FIG. 34, a time-varying speed change is started at a high number of revolutions in the example. This means that the state of the low ratio is maintained until a higher number of revolutions is reached, and acceleration performance is improved. Furthermore, in the example, after the automatic speed change is started, the number of revolutions decreases once and then increases again. In the comparative example, after the automatic speed change is started, the number of revolutions does not decrease, is maintained at the same level, and then increases. When the vehicle speed is the same, the smaller the number of revolutions, the better the low fuel consumption.

Furthermore, there is a slight difference in the displacement of the movable sheave in the drawing, but the displacement is large in the example. This corresponds to the movement amount $W_a > W_b$ of the movable sheave in FIGS. 20 and 22. The larger the movable sheave, the larger the range of the speed ratio.

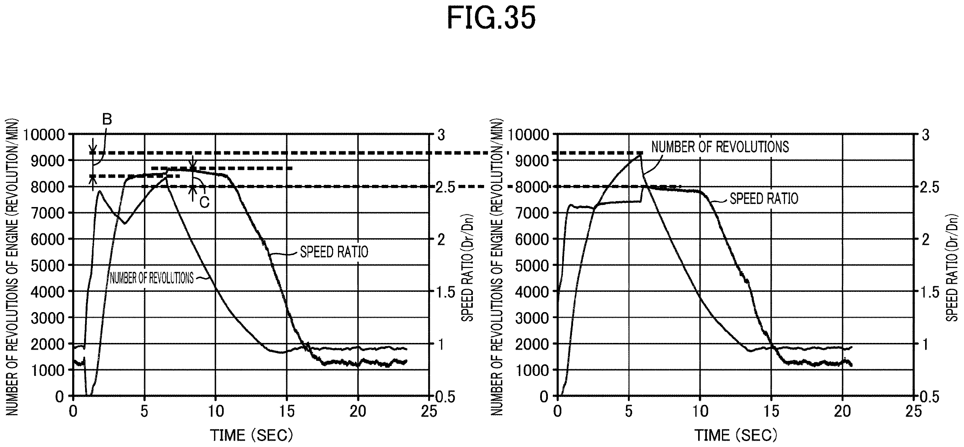

Next, FIG. 35 illustrates a result obtained by measuring a time change in the number of revolutions of the engine and the speed ratio with respect to the weight devices of the example and the comparative example, similarly to FIG. 34. The left side indicates the example, the right side indicates the comparative example, and in both the example and the comparative example, the opening degree of the engine is 100%.

The peak of the number of revolutions of the engine is about 8,400 rotations/min in the example and is about 9,200 rotations/min in the comparative example, and as indicated by B in FIG. 35, the peak value of the number of revolutions is low in the example. The reduction of the number of revolutions of the engine means that low fuel consumption is improved.

Furthermore, the speed ratio is about 2.7 at maximum in the example and is about 2.5 the comparative example, and as indicated by C in FIG. 35, the maximum value is large in the example. That is, in the example, the range of the speed ratio is large.

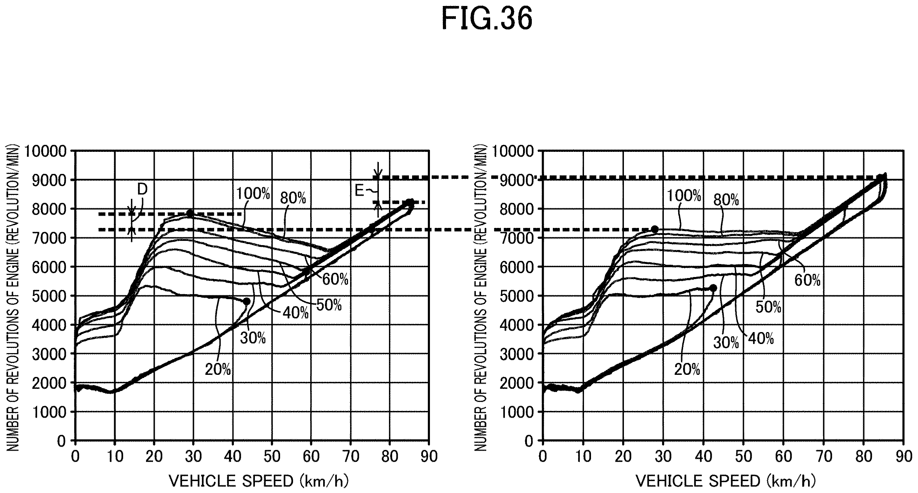

Next, FIG. 36 illustrates a change in the number of revolutions until the vehicle speed reaches a maximum value and then stops again with respect to the weight devices of the example and the comparative example, similarly to FIG. 34. The left side indicates the example and the right side indicates the comparative example. FIG. 36 illustrates cases where the opening degrees are 20%, 30%, 40%, 50%, 60%, 80%, and 100%.

The number of revolutions at the start of the automatic speed change is larger in the example than in the comparative example. As a representative example, when the opening degree is 100%, the number of revolutions is about 7,800 rotations/min in the example and is about 7,200 rotations/min in the comparative example, and as indicated by D in FIG. 36, the number of revolutions is large in the example. This means that in the example, the state of the low ratio is maintained until a higher number of revolutions is reached, and acceleration performance is improved.

Furthermore, in the example, after the automatic speed change is started, the number of revolutions of the engine is decreased once regardless of an increase in the vehicle speed. On the other hand, in the comparative example, after the automatic speed change is started, the number of revolutions is not decreased.

In both the example and the comparative example, when the vehicle speed is further increased, the number of revolutions is increased. For each opening degree, the number of revolutions when the vehicle speed is maximum is smaller in the example than in the comparative example. As a representative example, when the opening degree is 100%, the number of revolutions is about 8,400 rotations/min in the example and is about 9,200 rotations/min in the comparative example, and as indicated by E in FIG. 36, the number of revolutions is small in the example.

Except for during acceleration, the number of revolutions is smaller in the example than in the comparative example. Accordingly, fuel-saving performance is superior in the example. This is the same for all the opening degrees.

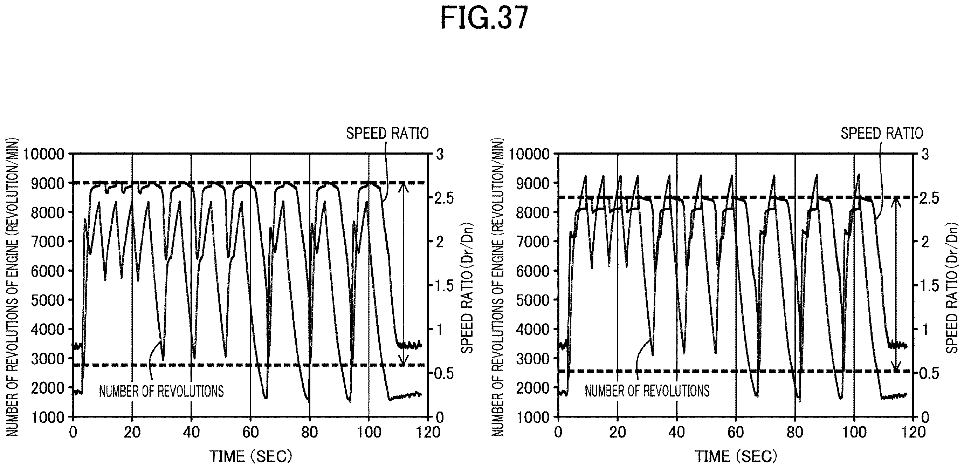

Next, FIG. 37 illustrates a change in the number of revolutions of the engine and the speed ratio in kick-down running in which sudden acceleration and sudden deceleration are repeated with respect to the weight devices of the example and the comparative example, similarly to FIG. 34. The left side indicates the example and the right side indicates the comparative example.

When comparing the change range of the speed ratio, a minimum value is slightly higher in the example than in the comparative example and a maximum value is about twice as large as a difference between minimum values. Accordingly, the change range in the example is large. Since the change range of the speed ratio is large, the example is superior in speed change performance.

Next, Table 2 below illustrates one example related to a difference between the fuel consumption performance of the weight device of the example and the fuel consumption performance of the weight device of the comparative example.

As illustrated in Table 2 below, a fuel-saving effect estimated from the injection time of fuel is 3.19% in class 1 of the world-wide motorcycle test cycle (WMTC) mode value and is 7.47% in class 2-1 thereof with respect to a weight layer of the comparative example.

The WMTC mode is a method of an exhaust gas test internationally standardized in ISO6460-2007: mortorcycle-measurement method of gaseous exhaust emissions and fuel consumption. A fuel consumption rate is not computed by the amount of exhaust gas during actual vehicle running, and is subjected to comparative evaluation by a cumulative injection time amount based on a fuel injection waveform as a substitute characteristic.

[Table 2]

| Weight Roller | WMTC Mode Value | Average Value of Vehicle Characteristics | | | Fuel-saving Effect - Fuel Injection Time Characteristics | |
|---|---|---|---|---|---|---|
| | | Number of Revolutions of Engine (revolution/min) | Vehicle Speed (km/h) | Speed Ratio Dr/Dn | Cumulative Injection Time (sec) | Fuel-saving Effect Estimated from Injection Time (%) |
| Example | Class 1 | 3819 | 22.8 | 1.501 | 129.72 | 3.19 |
| | Class 2-1 | 4607 | 36.7 | 1.882 | 180.11 | 7.47 |
| Comparative Example | Class 1 | 3981 | 22.8 | 1.434 | 134.00 | - |
| | Class 2-1 | 4902 | 36.7 | 1.768 | 194.64 | - |

INDUSTRIAL APPLICABILITY

Since the weight device of the present disclosure is superior in performance such as rapidity of response, a change range of a speed ratio, and low fuel consumption, it is useful as a weight device used in an automatic transmission.

DESCRIPTION OF REFERENCE CHARACTERS

| | |
|---|---|
| 10 | Weight Device |
| 11 | Side Plate |
| 12 | Shaft |
| 13 | Rolling Body |
| 13a | Rolling Body |
| 13b | Rolling Body |
| 13c | Rolling Body |
| 20 | Weight Device |
| 30 | Belt-type Automatic Transmission |
| 31 | Fixed Sheave |
| 32 | Shaft |
| 33 | Movable Sheave |
| 34 | Weight Device |
| 35 | Pulley |
| 37 | Ramp Plate |
| 39 | V-belt |
| 40 | Weight Device |
| 41 | Side Plate |
| 42 | Shaft |
| 43 | Rolling Body |
| 110 | Weight device |
| 111, 111a to 111d | Shaft |
| 112, 112a to 112c | Rolling Body |
| 113 | Shaft Fixing Member |
| 113a | Raised Part |
| 113b | Recessed Part |
| 113c | Raised Part |
| 113d | Recessed Part |
| 113e | Recessed Part |
| 114 | Contact Point |
| 115a, 115b | Through Hole |

| | |
|---|---|
| 116 | Pin |
| 120 | Weight Device |
| 130 | Belt-type Automatic Transmission |
| 131 | Fixed Sheave |
| 132 | Shaft |
| 133 | Movable Sheave |
| 134 | Weight Device |
| 135 | Pulley |
| 137 | Ramp Plate |
| 139 | V-belt |
| 141 | Straight Line |
| 142 | Straight Line |
| 143 | Triangle |
| 144 | Triangle |

**Claims**

1. A weight device comprising:

   a plurality of shafts;
   rolling bodies provided to the respective shafts; and
   a shaft fixer configured to fix the shafts in a parallel manner.

2. The weight device according to claim 1, wherein
   the shaft fixer is two side plates provided at both ends of each shaft, respectively.

3. The weight device according to claim 1 or 2, wherein
   the rolling body is rotatable by a rolling bearing or a sliding bearing

4. The weight device according to any one of claims 1 to 3, wherein
   at least an outer peripheral part of the rolling body is made of resin.

5. The weight device according to at least one of claims 1 to 4, wherein
   a center of gravity of the weight device is located at a position different from a position of a center shaft of the weight device.

6. The weight device according to at least one of claims 1 to 5, wherein
   four shafts are disposed in a rhombic shape, and
   the rolling bodies are provided to two shafts on a long diagonal line of the rhombic shape and the rolling body is provided to only one of the two shafts on a short diagonal line of the rhombic shape.

7. The weight device according to at least one of claims 1 to 4, comprising:
   a plurality of shafts equally disposed on a same circumference, wherein the rolling bodies are provided to the respective shafts.

8. The weight device according to at least one of claims 1 to 7, wherein
   when the weight device is used for a belt-type automatic transmission having a fixed sheave, a movable sheave, and a ramp plate, the weight device includes the rolling body coming in contact with only the ramp plate of the ramp plate and the movable sheave, and the rolling body coming in contact with only the movable sheave.

9. The weight device according to any one of claims 1 to 4, wherein
   the shafts include a first shaft, a second shaft, and a third shaft, and
   when viewed in parallel to the shafts, a distance X between a center of the first shaft and a center of the second shaft is 0.52 times or more of a distance Y between the center of the second shaft and a center of the third shaft, and the distance Y is longer than a distance Z between the center of the third shaft and the center of the first shaft, and than the distance X.

10. The weight device according to claim 9, wherein
when viewed in parallel to the shafts, in a direction connecting the centers of the second shaft to the third shaft, a distance $Y_2$ from the center of the second shaft to a position of the center of the first shaft is shorter than a distance $Y_1$ from the position of the center of the first shaft to the center of the third shaft.

11. The weight device according to claim 9 or 10, wherein
the distance Z is longer than the distance X.

12. The weight device according to any one of claims 9 to 11, wherein
when viewed in parallel to the shafts, in the direction connecting the centers of the second shaft to the third shaft, the center of gravity of the weight device is located adjacent to the third shaft with respect to the center of the first shaft.

13. The weight device according to any one of claims 9 to 12, wherein
when viewed in parallel to the shafts, the center of gravity of the weight device is located adjacent to the first shaft with respect to a line connecting the center of the second shaft to the center of the third shaft.

14. The weight device according to any one of claims 9 to 13, wherein
when viewed in parallel to the shafts, the centers of the first shaft to the third shaft form an obtuse triangle, and an angle corresponding to the first shaft is an angle exceeding 60°.

15. The weight device according to any one of claims 9 to 14, wherein
when viewed in parallel to the shafts, a triangle, which surrounds the three rolling bodies respectively provided to the first shaft to the third shaft and has each side coming in contact with two of the three rolling bodies, forms an obtuse triangle in which the angle corresponding to the first shaft is the angle exceeding 60°.

16. The weight device according to any one of claims 9 to 15, wherein
when viewed in parallel to the shafts, the shaft fixer includes a raised part having an outer shape protruding outward beyond a line connecting outer peripheries of the rolling bodies, and
the raised part is disposed on at least one of a part between the first shaft and the third shaft or a part near the third shaft and between the second shaft and the third shaft.

17. The weight device according to any one of claims 9 to 16, wherein
when viewed in parallel to the shafts, the shaft fixer includes a recessed part having an outer shape protruding inward, and
the recessed part is provided at a part between the first shaft and the second shaft and a part near the second shaft between the second shaft and the third shaft.

18. The weight device according to any one of claims 9 to 17, wherein
the rolling body provided to the third shaft has a diameter larger than diameters of the rolling bodies provided to the first shaft and the second shaft.

19. The weight device according to any one of claims 9 to 18, wherein,
when the weight device is disposed between a ramp plate and a movable sheave which are included in a belt-type automatic transmission, the rolling bodies provided to the first shaft and the second shaft come in contact with the ramp plate and the rolling body provided to the third shaft comes in contact with the movable sheave.

EP 3 581 828 A1

# FIG.1

# FIG.2

# FIG.3

# FIG.4

# FIG.5

B

33

13a

13c

10

37

13b

75.3°

# FIG.6

# FIG.7

# FIG.8

EP 3 581 828 A1

FIG.9

FIG.10

# FIG.11

EP 3 581 828 A1

## FIG.12

## FIG.13

# FIG.14

# FIG.15

## FIG.16

## FIG.17

FIG.18

$$Q=\frac{m \cdot r \cdot \omega^2}{\mathrm{Tan}\,\theta_1 + \tan\theta_2}$$

# FIG.19

# FIG.20

# FIG.21

# FIG.22

# FIG.23

# FIG.24

# FIG.25

# FIG.26

# FIG.27

# FIG.28

114

113a

# FIG.29

# FIG.30

# FIG.31

113e

113b

116

113a

# FIG.32

113c

115a

113

113d

113b

111d

115b

113a

# FIG.33

FIG.34

FIG.35

FIG.36

EP 3 581 828 A1

# FIG.37

EP 3 581 828 A1

**INTERNATIONAL SEARCH REPORT**

| International application No. |
| --- |
| PCT/JP2018/016046 |

**A. CLASSIFICATION OF SUBJECT MATTER**
Int.Cl. F16H9/18(2006.01)i

According to International Patent Classification (IPC) or to both national classification and IPC

**B. FIELDS SEARCHED**

Minimum documentation searched (classification system followed by classification symbols)
Int.Cl. F16H9/18

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 39-7610 Y1 (ISEKI & CO., LTD.) 28 March 1964, | 1–3 |
| Y | page 1, left column, line 5 to page 2, right | 4–5 |
| A | column, line 4 (Family: none) | 6–19 |
| Y | JP 2013-170598 A (OILES CORP.) 02 September 2013, paragraph [0031] (Family: none) | 4–5 |
| A | JP 2000-55154 A (BANDO CHEMICAL INDUSTRIES, LTD.) 22 February 2000, paragraphs [0014]-[0033], fig. 1-3 (Family: none) | 1–19 |

☐ Further documents are listed in the continuation of Box C.     ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 25 June 2018 (25.06.2018) | 10 July 2018 (10.07.2018) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**EP 3 581 828 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0324349 B